# EUROPEAN PATENT SPECIFICATION

(11) **EP 2 768 132 B1**
(45) Date of publication and mention of the grant of the patent: **29.12.2021**
(21) Application number: 14150371.4
(22) Date of filing: 07.01.2014
(51) Int. Cl.: H02M 7/48, H02J 3/38

(54) **Power conditioner, photovoltaic system, and abnormality determination method**
Inverter, Photovoltaiksystem und Abweichungsbestimmungsverfahren
Conditionneur d'énergie, système photovoltaïque et procédé de détermination d'anomalie

(30) Priority: 24.01.2013 JP 2013011543; 06.11.2013 JP 2013230414
(43) Date of publication of application: 20.08.2014
(73) Proprietor: OMRON CORPORATION, Kyoto-shi, Kyoto 600-8530 (JP)
(72) Inventor: Yasuhiro, Tsubota, Kyoto-shi, Kyoto 600-8530 (JP); Kotaro, Nakamura, Kyoto-shi, Kyoto 600-8530 (JP); Masao, Mabuchi, Kyoto-shi, Kyoto 600-8530 (JP); Takuya, Nakai, Kyoto-shi, Kyoto 600-8530 (JP)
(74) Representative: Kilian Kilian & Partner

(56) References cited:
- EP-A1- 2 549 635
- WO-A2-2008/132553
- JP-A- 2011 223 764
- US-A1- 2012 248 863
- US-A1- 2012 319 489
- None

## Description

### BACKGROUND

### 1. TECHNICAL FIELD

The present invention relates to a power conditioner, a photovoltaic system, and an abnormality determination method.

### 2. RELATED ART

In Japanese Patent Publication No. 10-063358, an output voltage of a photovoltaic array is measured with a voltage divider provided in a stage subsequent to a parallel connection point at which a plurality of photovoltaic strings are connected in parallel.

Further prior art documents are WO 2008/132553 A2, US 2012/248863 A1, EP 2 549 635 A1, JP 2011 223764 A and US 2012/319489 A1.

A voltage at the parallel connection point at which the plurality of photovoltaic strings are connected in parallel depends on the voltage at the photovoltaic string that outputs the highest voltage in the plurality of photovoltaic strings. Accordingly, in the case that the plurality of photovoltaic strings differ from one another in electric power generation such the case that the number of photovoltaic modules constituting each of the plurality of photovoltaic strings varies, an open-circuit voltage of each of the plurality of photovoltaic strings cannot exactly be detected by measuring the voltage at the parallel connection point. It is an object of the invention to overcome this drawback. This object is achieved by the subject matters of the independent claims 1, 5, 8 and 11. Further advantageous embodiments of the invention are the subject matter of the dependent claims. The invention is defined by the claims. Aspects of the invention are set out below

### SUMMARY

In accordance with a first aspect of the present invention, a power conditioner that is configured to boost a direct current output from a first power supply, convert the boosted direct current into an alternating current, and output the alternating current onto a side of a system power supply, the power conditioner includes: a first boost circuit that includes a first switch connected between output terminals of the first power supply, a first coil or a first transformer winding configured to boost a voltage from the first power supply by turning on and off the first switch, and a first backflow prevention circuit configured to rectify an output from the first coil or the first transformer winding; a potential controller configured to perform control such that a potential at the first backflow prevention circuit on the side opposite to the first power supply is greater than or equal to a potential at the first backflow prevention circuit on the side of the first power supply during an off period of the first switch; an open-circuit voltage value acquisition unit configured to acquire a first open-circuit voltage value of the first power supply, when the first switch is in the off period while the potential controller performs the control such that the voltage at the first backflow prevention circuit on the side opposite to the first power supply is greater than or equal to the voltage at the first backflow prevention circuit on the side of the first power supply; and a power supply abnormality determination unit configured to determine whether the first power supply has an abnormality based on comparison between the first open-circuit voltage value and a first reference voltage value that is previously fixed based on a characteristic of the first power supply.

The power conditioner of the first aspect may further include: a second boost circuit configured to boost a voltage at a second power supply; and a connection unit configured to connect an output side of the first boost circuit and an output side of the second boost circuit in parallel with each other. In the power conditioner, the potential controller performs the control such that the voltage at the connection unit is greater than or equal to the voltage on an input side of the first boost circuit by turning on and off a second switch included in the second boost circuit when the open-circuit voltage value acquisition unit acquires the first open-circuit voltage value, and therefore the potential controller performs the control such that the potential at the first backflow prevention circuit on the side opposite to the first power supply is greater than or equal to the potential at the first backflow prevention circuit on the side of the first power supply.

The power conditioner of the first aspect may further include: an inverter configured to convert the direct current output from the first boost circuit into the alternating current, and output the alternating current onto the side of the system power supply; and a connection unit configured to connect an output side of the first boost circuit and an input side of the inverter. In the power conditioner, the potential controller outputs a power from the system power supply onto the side of the connection unit to set the voltage at the connection unit to at least the voltage on an input side of the first boost circuit by controlling the inverter when the open-circuit voltage value acquisition unit acquires the first open-circuit voltage value, and therefore the potential controller performs the control such that the potential at the first backflow prevention circuit on the side opposite to the first power supply is greater than or equal to the potential at the first backflow prevention circuit on the side of the first power supply.

The power conditioner of the first aspect may further include: an inverter configured to convert the direct current output from the connection unit into the alternating current, and output the alternating current onto the side of a system power supply. In the power conditioner, the potential controller outputs a power from the system power supply onto the side of the connection unit to set the voltage at the connection unit to at least the voltage on the input side of the first boost circuit by controlling the inverter when the potential controller cannot perform the control such that the voltage at the connection unit is greater than or equal to the voltage on the input side of the first boost circuit by turning on and off the second switch included in the second boost circuit, and therefore the potential controller performs the control such that the potential at the first backflow prevention circuit on the side opposite to the first power supply is greater than or equal to the potential at the first backflow prevention circuit on the side of the first power supply.

In the power conditioner of the first aspect, the second boost circuit may include: a second coil or a second transformer winding configured to boost the voltage from the second power supply by turning on and off the second switch; and a second backflow prevention circuit configured to rectify the output from the second coil or the second transformer winding, the potential controller may perform the control such that the potential at the second backflow prevention circuit on the side opposite to the second power supply is greater than or equal to the potential at the second backflow prevention circuit on the side of the second power supply during the off period of the second switch, the open-circuit voltage value acquisition unit may acquire a second open-circuit voltage value of the second power supply, when the second switch is in the off period while the potential controller performs the control such that the voltage at the second backflow prevention circuit on the side opposite to the second power supply is greater than or equal to the voltage at the second backflow prevention circuit on the side of the second power supply, and the power supply abnormality determination unit may determine whether the second power supply has the abnormality based on the comparison between the second open-circuit voltage value and a second reference voltage value that is previously fixed based on the characteristic of the second power supply.

In accordance with a second aspect of the present invention, a power conditioner that is configured to boost a direct current output from a first power supply, convert the boosted direct current into an alternating current, and output the alternating current onto a side of a system power supply, the power conditioner includes: a first boost circuit that includes a first switch connected between output terminals of the first power supply, a first coil or a first transformer winding configured to boost a voltage from the first power supply by turning on and off the first switch, and a first backflow prevention circuit configured to rectify an output from the first coil or the first transformer winding; an inverter configured to convert the direct current output from the first boost circuit into the alternating current, and to output the alternating current onto the side of the system power supply; a connection unit configured to connect the output side of the first boost circuit and the input side of the inverter; a potential controller configured to output a power from the system power supply onto the side of the connection unit to set the voltage at the connection unit to at least the voltage on an input side of the first boost circuit by controlling the inverter during an off period of the first switch, and therefore the potential controller performs control such that a potential at the first backflow prevention circuit on the side opposite to the first power supply is greater than or equal to the potential at the first backflow prevention circuit on the side of the first power supply; an open-circuit voltage value acquisition unit configured to acquire a first open-circuit voltage value of the first power supply, when the first switch is in the off period while the potential controller performs the control such that the voltage at the first backflow prevention circuit on the side opposite to the first power supply is greater than or equal to the voltage at the first backflow prevention circuit on the side of the first power supply; and a power supply abnormality determination unit configured to determine whether the first power supply has an abnormality based on comparison between the first open-circuit voltage value and a first reference voltage value that is previously fixed based on a characteristic of the first power supply.

In accordance with a third aspect of the present invention, a photovoltaic system includes: a first photovoltaic cell that is of the first power supply; and the power conditioner configured to convert the direct current from the first photovoltaic cell into the alternating current and output the alternating current onto the side of the system power supply.

In accordance with a fourth aspect of the present invention, a photovoltaic system includes: a first photovoltaic cell that is of the first power supply; a second photovoltaic cell that is of the second power supply connected in parallel to the first photovoltaic cell; and the power conditioner configured to convert the direct currents from the first and second photovoltaic cells into the alternating currents and output the alternating currents onto the side of the system power supply.

In accordance with a fifth aspect of the present invention, an abnormality determination method for making an abnormality determination of a first power supply connected to a power conditioner configured to boost a direct current output from the first power supply, convert the boosted direct current into an alternating current, and output the alternating current onto a side of a system power supply, the power conditioner comprising a first boost circuit that includes a first switch connected between output terminals of the first power supply, a first coil or a first transformer winding configured to boost a voltage from the first power supply by turning on and off the first switch, and a first backflow prevention circuit configured to rectify an output from the first coil or the first transformer winding, the abnormality determination method includes the steps of: performing control such that a potential at the first backflow prevention circuit on the side opposite to the first power supply is greater than or equal to a potential at the first backflow prevention circuit on the side of the first power supply during an off period of the first switch; acquiring a first open-circuit voltage value of the first power supply, when the first switch is in the off period while the potential controller performs the control such that the voltage at the first backflow prevention circuit on the side opposite to the first power supply is greater than or equal to the voltage at the first backflow prevention circuit on the side of the first power supply; and determining whether the first power supply has an abnormality based on comparison between the first open-circuit voltage value and a first reference voltage value that is previously fixed based on a characteristic of the first power supply.

In the abnormality determination method of the fifth aspect, the power conditioner may include: a second boost circuit that includes a second switch connected between output terminals of a second power supply, the second boost circuit boosting the direct current from the second power supply by turning on and off the second switch; and a connection unit configured to connect an output side of the first boost circuit and an output side of the second boost circuit in parallel with each other, and, in the control step, the control may be performed such that the voltage at the connection unit is greater than or equal to the voltage on an input side of the first boost circuit by turning on and off the second switch when the first open-circuit voltage value is acquired, and therefore the control may be performed such that the potential at the first backflow prevention circuit on the side opposite to the first power supply is greater than or equal to the potential at the first backflow prevention circuit on the side of the first power supply.

In the abnormality determination method of the fifth aspect, the power conditioner may include: an inverter configured to convert the direct current output from the first boost circuit into the alternating current, and output the alternating current onto the side of the system power supply; and a connection unit configured to connect an output side of the first boost circuit and an input side of the inverter, in the control step, a power may be output from the system power supply onto the side of the connection unit to set the voltage at the connection unit to at least the voltage on the input side of the first boost circuit by controlling the inverter when the first open-circuit voltage value is acquired, and therefore the control may be performed such that the potential at the first backflow prevention circuit on the side opposite to the first power supply is greater than or equal to the potential at the first backflow prevention circuit on the side of the first power supply.

In the abnormality determination method of the fifth aspect, the power conditioner may include: an inverter that is connected to the output side of the first boost circuit with the connection unit interposed therebetween, the inverter converting the direct current output from the first boost circuit into the alternating current, and outputting the alternating current onto the side of the system power supply, in the control step, a power may be output from the system power supply onto the side of the connection unit to set the voltage at the connection unit to at least the voltage on the input side of the first boost circuit by controlling the inverter when the control cannot be performed such that the voltage at the connection unit is greater than or equal to the voltage on the input side of the first boost circuit by turning on and off the second switch, and therefore the control may be performed such that the potential at the first backflow prevention circuit on the side opposite to the first power supply is greater than or equal to the potential at the first backflow prevention circuit on the side of the first power supply.

### BRIEF DESCRIPTION OF THE DRAWINGS

Fig. 1 is a system configuration diagram illustrating an example of an entire configuration of a photovoltaic system according to an embodiment;
Fig. 2 is a view illustrating an example of a functional block of a control device of the embodiment;
Fig. 3 is a flowchart illustrating an example of a procedure in which the control device determines whether a photovoltaic string has an abnormality;
Fig. 4 is a flowchart illustrating an example of a procedure in which a potential controller performs control such that a voltage at a connection unit is greater than or equal to a voltage on an input side of a boost circuit connected to the photovoltaic string of a determination target;
Fig. 5 is a system configuration diagram illustrating an example of an entire configuration of a photovoltaic system according to a first modification of the embodiment;
Fig. 6 is a flowchart illustrating an example of a procedure in which a control device of the first modification determines whether a photovoltaic string has an abnormality;
Fig. 7 is a system configuration diagram illustrating an example of an entire configuration of a photovoltaic system according to a second modification of the embodiment; and
Fig. 8 is a flowchart illustrating an example of a procedure in which a control device of the second modification determines whether the photovoltaic string has the abnormality.

### DETAILED DESCRIPTION

Hereinafter, an embodiment of the present invention will be described. However, the present invention is not limited to the embodiment. All combinations of features described in the embodiment are not necessary for the solution for solving the problem.

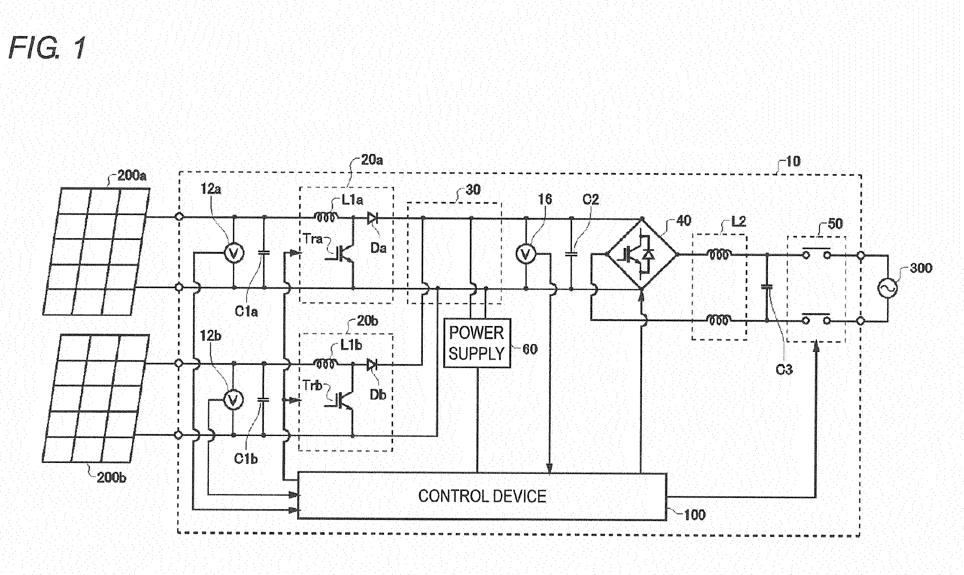

Fig. 1 is a system configuration diagram illustrating an example of an entire configuration of a photovoltaic system of the embodiment. The photovoltaic system includes a plurality of photovoltaic strings 200a and 200b and a power conditioner 10. Each of the plurality of photovoltaic strings 200a and 200b includes plurality of photovoltaic modules connected in series or parallel. The plurality of photovoltaic strings 200a and 200b are examples of the first power supply and the second power supply, each of which outputs a DC voltage. The first power supply and the second power supply may be a photovoltaic cell, a photovoltaic module in which the photovoltaic cells are connected in series or parallel, or a power supply such as a fuel cell except the photovoltaic cell. The power conditioner 10 is an example of the power supply system.

The power conditioner 10 boosts the DC voltages output from the plurality of photovoltaic strings 200a and 200b, converts the boosted DC voltages into AC voltages, and outputs the AC voltages onto a side of a system power supply 300.

The power conditioner 10 includes capacitors C1a and C1b, boost circuits 20a and 20b, a connection unit 30, a capacitor C2, an inverter 40, a coil L2, a capacitor C3, a connected relay 50, a power supply 60, and a control device 100. In the embodiment, the power conditioner 10 includes the boost circuits 20a and 20b. Alternatively, at least one of the boost circuits 20a and 20b may be provided outside the power conditioner 10.

Both ends of the capacitor C1a are electrically connected to a positive electrode terminal and a negative electrode terminal of the photovoltaic string 200a, respectively, and the capacitor C1a smoothes the DC voltage output from the photovoltaic string 200a. The boost circuit 20a includes a coil L1a, a switch Tra, and a diode Da. For example, the boost circuit 20a is what is called a chopper switching regulator.

The switch Tra is an example of the first switch connected between the positive electrode terminal and the negative electrode terminal of the photovoltaic string 200a. For example, the switch Tra may be an Insulated Gate Bipolar Transistor (IGBT). One end of the coil L1a is connected to one end of the capacitor C1a, and the other end of the coil L1a is connected to a collector of the switch Tra. The collector of the switch Tra is connected to an anode of the diode Da, and an emitter of the switch Tra is connected to the other end of the capacitor C1a. The coil L1a accumulates energy based on a power from the photovoltaic string 200a during an on period of the switch Tra, and discharges the energy during an off period of the switch Tra. Therefore, the boost circuit 20a boosts the DC voltage output from the photovoltaic string 200a. The diode Da is provided between the switch Tra and the connection unit 30, and rectifies an output from the coil L1a. The diode Da prevents the boosted DC voltage from flowing onto an input side from an output side of the boost circuit 20a. The diode Da is connected in series with the photovoltaic string 200a, and is an example of the first backflow prevention circuit that prevents the current from flowing back to the photovoltaic string 200a.

Both ends of the capacitor C1b are electrically connected to the positive electrode terminal and the negative electrode terminal of the photovoltaic string 200b, respectively, and the capacitor C1b smoothes the DC voltage output from the photovoltaic string 200b. The boost circuit 20b includes a coil L1b, a switch Trb, and a diode Db. For example, the boost circuit 20a is what is called a chopper switching regulator.

The switch Trb is an example of the second switch connected between the positive electrode terminal and negative electrode terminal of the photovoltaic string 200b. For example, the switch Trb may be the Insulated Gate Bipolar Transistor (IGBT). One end of the coil L1b is connected to one end of the capacitor C1b, and the other end of the coil L1b is connected to a collector of the switch Trb. The collector of the switch Trb is connected to an anode of the diode Db, and an emitter of the switch Trb is connected to the other end of the capacitor C1b. The coil L1b accumulates energy based on the power from the photovoltaic string 200b during the on period of the switch Trb, and discharges the energy during the off period of the switch Trb. Therefore, the boost circuit 20b boosts the DC voltage output from the photovoltaic string 200b. The diode Db is provided between the switch Trb and the connection unit 30, and rectifies the output from the coil L1b. The diode Db prevents the boosted DC voltage from flowing onto the input side from the output side of the boost circuit 20b. The diode Db is connected in series with the photovoltaic string 200b, and is an example of the second backflow prevention circuit that prevents the current from flowing back to the photovoltaic string 200b.

The boost circuits 20a and 20b are not limited to the above configurations. For example, the boost circuits 20a and 20b may be constructed by insulation type boost circuits, such as a half-bridge type boost circuit and a full-bridge type boost circuit, which have a transformer winding including a primary winding and a secondary winding. The insulation type boost circuit includes a plurality of switches connected between output terminals of the power supply such as the photovoltaic string 200a and the photovoltaic string 200b. The plurality of switches are connected in series with the primary winding. By turning on and off the plurality of switches, an excitation current is passed through the primary winding, and an induction current is passed through the secondary winding. In the case that the boost circuit included in the photovoltaic system is the insulation type boost circuit, such as the full-bridge type boost circuit, which has the transformer winding, the plurality of switches that are connected in series with the primary winding and between the output terminals of the power supply act as the first switch or the second switch.

The connection unit 30 connects the output side of the boost circuit 20a and the output side of the boost circuit 20b in parallel to each other. The capacitor C2 smoothes the DC voltage output from the connection unit 30. The inverter 40 includes a switch, and converts the DC voltages output from the boost circuits 20a and 20b into the AC voltages by turning on and off the switch. For example, the inverter 40 may be constructed by a single-phase full-bridge PWM inverter including four bridge-connected semiconductor switches. In one of pairs in the four semiconductor switches, the semiconductor switches are connected in series. In the other pair in the four semiconductor switches, the semiconductor switches are connected in series. The other pair of semiconductor switches is connected in parallel to one of pairs of semiconductor switches.

The coil L2 and the capacitor C3 are provided between the inverter 40 and the system power supply 300. The coil L2 and the capacitor C3 remove a noise from the AC voltage output from the inverter 40. The connected relay 50 is provided between the capacitor C3 and the system power supply 300. The power conditioner 10 and the system power supply 300 are electrically connected to each other by turning on the relay 50, and the power conditioner 10 and the system power supply 300 are electrically disconnected from each other by turning off the relay 50.

For example, the power supply 60 is constructed by a power supply IC chip. The power supply 60 is connected to both the ends of the connection unit 30. The power supply 60 generates a power indicating a predetermined voltage value from the DC voltage taken out from the connection unit 30, and supplies the generated power to the control device 100.

In order to obtain the maximum power from the photovoltaic strings 200a and 200b, the control device 100 controls the switching operations of the boost circuits 20a and 20b and the inverter 40, boosts the DC voltages output from the photovoltaic strings 200a and 200b, converts the boosted DC voltages into the AC voltages, and outputs the AC voltages onto the side of the system power supply 300.

The power conditioner 10 also includes voltage sensors 12a and 12b and a voltage sensor 16. The voltage sensor 12a detects a voltage value Vain corresponding to a potential difference at both the ends of the photovoltaic string 200a. The voltage sensor 12b detects a voltage value Vbin corresponding to a potential difference at both the ends of the photovoltaic string 200b. The voltage sensor 16 detects a voltage value Vout corresponding to a potential difference at both the ends of the connection unit 30.

In the photovoltaic system having the above configuration, open-circuit voltage values of the photovoltaic strings 200a and 200b are detected, and whether the photovoltaic strings 200a and 200b have an abnormality is determined based on the detected open-circuit voltage values.

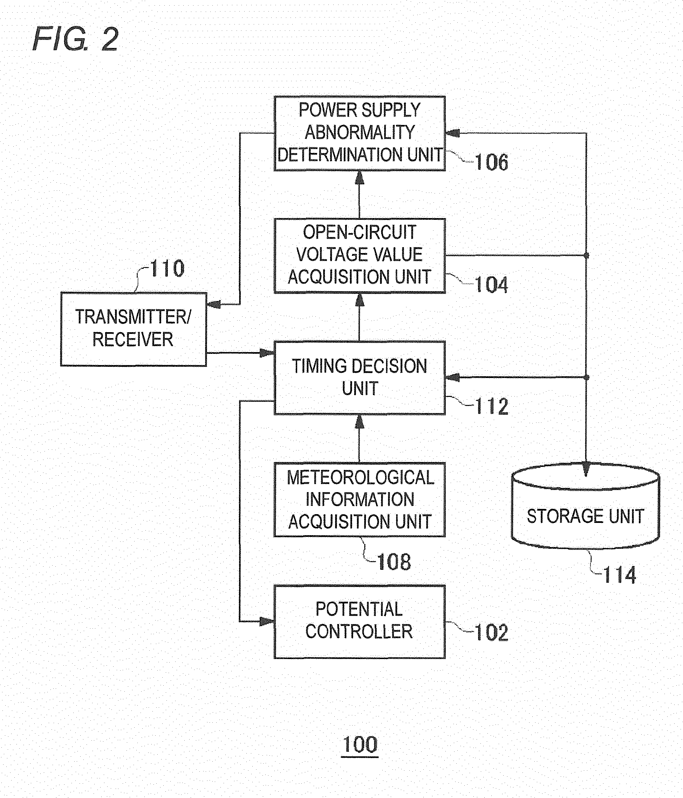

Fig. 2 is a view illustrating an example of a functional block of the control device 100. The control device 100 includes a potential controller 102, an open-circuit voltage value acquisition unit 104, a power supply abnormality determination unit 106, a meteorological information acquisition unit 108, a transmitter/receiver 110, a timing decision unit 112, and a storage unit 114. The potential controller 102, the open-circuit voltage value acquisition unit 104, the power supply abnormality determination unit 106, the meteorological information acquisition unit 108, the timing decision unit 112, and the storage unit 114 may be constructed by a microcomputer. The transmitter/receiver 110 may be constructed by a wireless antenna.

The potential controller 102 accumulates the energy based on the power output from the photovoltaic string 200a in the coil L1a during the on period of the switch Tra by turning on and off the switch Tra included in the boost circuit 20a, and boosts the voltage at the photovoltaic string 200a using the boost circuit 20a by discharging the energy from the coil L1a during the off period of the switch Tra. The potential controller 102 accumulates the energy based on the power output from the photovoltaic string 200b in the coil L1b during the on period of the switch Trb by turning on and off the switch Trb included in the boost circuit 20b, and boosts the voltage at the photovoltaic string 200b using the boost circuit 20b by discharging the energy from the coil L1b during the off period of the switch Trb.

When acquiring the first open-circuit voltage value that is of the open-circuit voltage value of the photovoltaic string 200a, the potential controller 102 turns off the switch Tra of the boost circuit 20a. When acquiring the first open-circuit voltage value of the photovoltaic string 200a, the potential controller 102 performs control such that a potential at the diode Da on the side opposite to the photovoltaic string 200a is greater than or equal to a potential at the diode Da on the side of the photovoltaic string 200a. Therefore, the voltage value on the input side of the boost circuit 20a is detected without physically disconnecting the photovoltaic string 200a from the boost circuit 20a, which allows the detection of the open-circuit voltage value at the photovoltaic string 200a.

When acquiring the second open-circuit voltage value that is of the open-circuit voltage value of the photovoltaic string 200b, the potential controller 102 turns off the switch Trb of the boost circuit 20b. When acquiring the second open-circuit voltage value of the photovoltaic string 200b, the potential controller 102 performs the control such that the potential at the diode Db on the side opposite to the photovoltaic string 200b is greater than or equal to the potential at the diode Db on the side of the photovoltaic string 200b. Therefore, the voltage value on the input side of the boost circuit 20b is detected without physically disconnecting the photovoltaic string 200b from the boost circuit 20b, which allows the detection of the open-circuit voltage value at the photovoltaic string 200b.

The open-circuit voltage value acquisition unit 104 acquires the voltage value at each point of the power conditioner 10 through the voltage sensors 12a, 12b, and 16 included in the power conditioner 10. The open-circuit voltage value acquisition unit 104 acquires the first open-circuit voltage value of the photovoltaic string 200a when the switch Tra of the boost circuit 20a is in the off period while the voltage at the diode Da on the side opposite to the photovoltaic string 200a is controlled so as to become greater than or equal to the voltage at the diode Da on the side of the photovoltaic string 200a. The open-circuit voltage value acquisition unit 104 also acquires the second open-circuit voltage value of the photovoltaic string 200b when the switch Trb of the boost circuit 20b is in the off period while the voltage at the diode Db on the side opposite to the photovoltaic string 200b is controlled so as to become greater than or equal to the voltage at the diode Db on the side of the photovoltaic string 200b.

At this point, the power supply 60 acquires a driving power, which is of the power used to drive itself, from the connection unit 30. In the case that the voltage on the output side of the boost circuit 20a is less than that on the input side, the current flows partially onto the side of the inverter 40 from the photovoltaic string 200a through the diode Da. Therefore, the voltage at both the ends of the capacitor C2 fluctuates. That is, the voltage at both the ends of the connection unit 30 fluctuates. When the voltage at both the ends of the connection unit 30 fluctuates, the power supplied to the power supply 60 becomes unstable, and possibly the power is unstably supplied to the control device 100 from the power supply 60.

In the embodiment, the voltage on the output side of the boost circuit connected to the photovoltaic string in which the open-circuit voltage value is acquired is set greater than or equal to the voltage on the input side. Therefore, the potential on the anode side of the diode included in the boost circuit can be set greater than or equal to the potential on the cathode side. This enables the current to be prevented from flowing partially onto the side of the inverter 40 from the photovoltaic string of the detection target through the diode included in the boost circuit. Therefore, the open-circuit voltage of the photovoltaic string can exactly be detected. Additionally, because the voltage at both the ends of the connection unit 30 is stabilized, the power supplied to the power supply 60 becomes stable, and the power is stably supplied to the control device 100 from the power supply 60. The power supply 60 may directly take the power from the system power supply 300, and generate the power supplied to the control device 100 based on the power output from the system power supply 300.

In the case that the open-circuit voltage value acquisition unit 104 acquires the first open-circuit voltage value, the potential controller 102 may perform the control such that the voltage at the connection unit 30 is greater than or equal to the voltage on the input side of the boost circuit 20a by turning on and off the switch Trb included in the boost circuit 20b. In the case that the open-circuit voltage value acquisition unit 104 acquires the second open-circuit voltage value, the potential controller 102 may perform the control such that the voltage at the connection unit 30 is greater than or equal to the voltage on the input side of the boost circuit 20b by controlling the switch Tra included in the boost circuit 20a.

At this point, depending on a meteorological condition, sometimes a small amount of power is obtained from the photovoltaic string 200a or the photovoltaic string 200b, and the voltage at the connection unit 30 hardly increases greater than or equal to the voltage on the input side of the boost circuit 20b or the voltage on the input side of the boost circuit 20a by the boost operation of the boost circuit 20a or 20b. In this case, the potential controller 102 may control the switch included in the inverter 40, and increase the voltage at the connection unit 30 such that the voltage at the connection unit 30 is greater than or equal to the voltage on the input side of the boost circuit 20b or the voltage on the input side of the boost circuit 20a based on the power from the system power supply 300.

In the case that the voltage at the connection unit 30 cannot be increased greater than or equal to the voltage on the input side of the boost circuit 20a by controlling the switch Trb included in the boost circuit 20b, the potential controller 102 may output the power onto the side of the connection unit 30 from the system power supply 300 by turning on and off each switch included in the inverter 40, and perform the control such that the voltage at the connection unit 30 is greater than or equal to the voltage on the input side of the boost circuit 20a. In the case that the voltage at the connection unit 30 cannot be increased greater than or equal to the voltage on the input side of the boost circuit 20a by controlling the switch Tra included in the boost circuit 20a, the potential controller 102 may output the power onto the side of the connection unit 30 from the system power supply 300 by turning on and off each switch included in the inverter 40, and perform the control such that the voltage at the connection unit 30 is greater than or equal to the voltage on the input side of the boost circuit 20b. The potential controller 102 performs PWM control to each switch included in the inverter 40 such that the current output from the inverter 40 is opposite in phase to the voltage at the system power supply 300, which allows the inverter 40 to output the power onto the side of the connection unit 30 from the system power supply 300.

The power supply abnormality determination unit 106 determines whether the photovoltaic string 200a has the abnormality based on comparison between the first open-circuit voltage value and the first reference voltage value that is previously fixed based on a characteristic of the photovoltaic string 200a. The power supply abnormality determination unit 106 determines whether the photovoltaic string 200b has the abnormality based on the comparison between the second open-circuit voltage value and the second reference voltage value that is previously fixed based on the characteristic of the photovoltaic string 200b. Possibly the outputs of the photovoltaic string 200a and the photovoltaic string 200b decrease due to degradation. The detected open-circuit voltage value also decreases in the case that the outputs decrease. Therefore, the power supply abnormality determination unit 106 may determine that the photovoltaic string 200a or 200b has the abnormality in the case that the first or second open-circuit voltage value is less than or equal to the first or second reference voltage value by a predetermined value.

The power supply abnormality determination unit 106 may decide that the first or second open-circuit voltage value, which is initially acquired on the predetermined meteorological condition by the open-circuit voltage value acquisition unit 104, is the first or second reference voltage value. The power supply abnormality determination unit 106 may decide that the first or second open-circuit voltage value, which is initially acquired by the open-circuit voltage value acquisition unit 104 when the outputs of the photovoltaic strings 200a and 200b are predetermined values, is the first or second reference voltage value. The power supply abnormality determination unit 106 may decide that the first or second open-circuit voltage value, which is initially acquired by the open-circuit voltage value acquisition unit 104 when the output power of the power conditioner 10 is a predetermined value, is the first or second reference voltage value. The power supply abnormality determination unit 106 may decide that the first or second open-circuit voltage value, which is initially acquired by the open-circuit voltage value acquisition unit 104 when an internal temperature of the power conditioner 10 is a predetermined temperature, is the first or second reference voltage value.

The power supply abnormality determination unit 106 compares the decided first or second reference voltage value to the first or second open-circuit voltage value presently acquired by the open-circuit voltage value acquisition unit 104. The power supply abnormality determination unit 106 may determine that the photovoltaic string 200a or 200b has the abnormality when a difference between the first or second reference voltage value and the first or second open-circuit voltage value is greater than a predetermined reference difference.

The meteorological information acquisition unit 108 acquires meteorological information around a site where the photovoltaic strings 200a and 200b are places. The meteorological information is a parameter that has an influence on the outputs of the photovoltaic strings 200a and 200b. The meteorological information includes temperature and illuminance. The transmitter/receiver 110 conducts communication with the outside in a wireless or wired manner. The transmitter/receiver 110 may receive a message to provide a command to determine the abnormalities of the photovoltaic strings 200a and 200b from an external management device. The transmitter/receiver 110 may transmit a determination result of the power supply abnormality determination unit 106 to the external management device. The transmitter/receiver 110 may transmit the first and second open-circuit voltage values acquired by the open-circuit voltage value acquisition unit 104 to the external management device.

The timing decision unit 112 decides determination timing indicating the timing the power supply abnormality determination unit 106 determines whether the photovoltaic strings 200a and 200b have the abnormalities. For example, the timing decision unit 112 may decide the determination timing based on the meteorological information acquired by the meteorological information acquisition unit 108. The timing decision unit 112 may decide that present time is the determination timing in the case that the present meteorological condition agrees with the meteorological condition at the time the first and second reference voltage values are decided.

The timing decision unit 112 may decide that the present time is the determination timing in the case that each of the present outputs of the photovoltaic strings 200a and 200b falls within a reference range, which is fixed based on the output when the first and second reference voltage values are acquired. The timing decision unit 112 may decide that the present time is the determination timing in the case that the present output power of the power conditioner 10 falls within a reference range, which is fixed based on the output power when the first and second reference voltage values are acquired. The timing decision unit 112 may decide that the present time is the determination timing in the case that the present internal temperature of the power conditioner 10 falls within a reference range, which is fixed based on the internal temperature when the first and second reference voltage values are acquired.

The timing decision unit 112 may decide that the present time is the determination timing in the case that a present date becomes a predetermined date. The timing decision unit 112 may decide the determination timing every time the number of start-up times of the power conditioner 10 becomes predetermined times. The timing decision unit 112 may decide the determination timing at the time at least one of parameters including the meteorological condition, the outputs of the photovoltaic strings 200a and 200b, the output power of the power conditioner 10, and the internal temperature of the power conditioner 10 is included in the initially-fixed reference range after the present date becomes the predetermined date or after the number of start-up times of the power conditioner 10 reaches the predetermined times.

The timing decision unit 112 may decide that the present time is the determination timing in the case that the transmitter/receiver 110 receives the message to provide the command to determine the abnormality from the external management device. The timing decision unit 112 may decide the determination timing at the time at least one of parameters including the meteorological condition, the outputs of the photovoltaic strings 200a and 200b, the output power of the power conditioner 10, and the internal temperature of the power conditioner 10 is included in the initially-fixed reference range after the transmitter/receiver 110 receives the message to provide the command to determine the abnormality from the external management device.

The first and second reference voltage values, the meteorological condition deciding the timing of the abnormal determinations, the outputs of the photovoltaic strings 200a and 200b, and the output power and the internal temperature of the power conditioner 10 are stored in the storage unit 114.

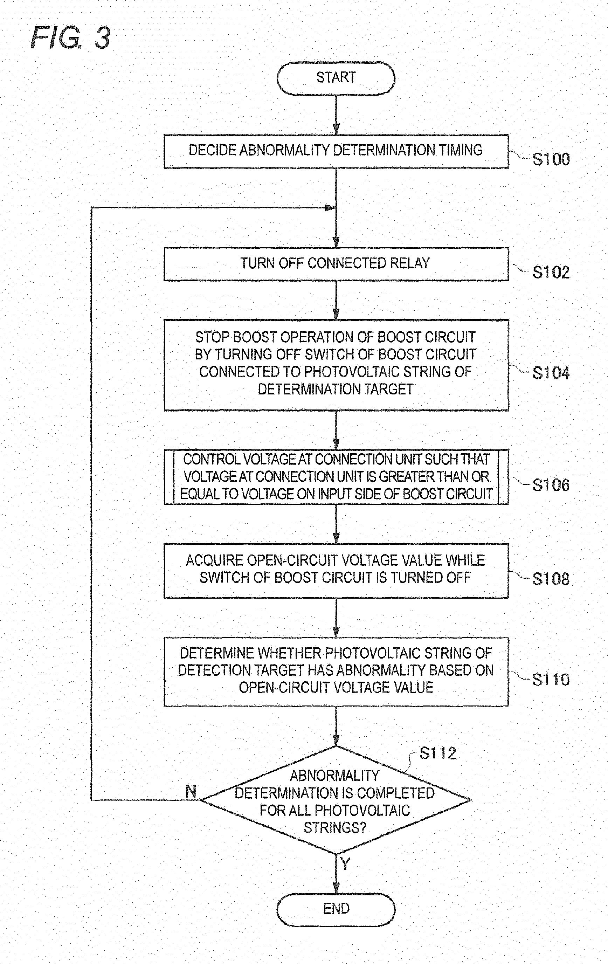

Fig. 3 is a flowchart illustrating an example of a procedure in which the control device 100 determines whether the photovoltaic strings 200a and 200b have the abnormalities.

The timing decision unit 112 decides that the present time is the determination timing in which the abnormal determinations of the photovoltaic strings 200a and 200b are made in the case that any one of the above conditions is satisfied (S100). In order to reduce useless power consumption, the control device 100 turns off the connected relay 50 to electrically disconnect the power conditioner 10 and the system power supply 300 from each other (S102).

The potential controller 102 turns off the switch of the target boost circuit connected to the photovoltaic string of the determination target, and stops the boost operation of the target boost circuit (S104). For example, the potential controller 102 turns off the switch Tra of the boost circuit 20a connected to the photovoltaic string 200a of the determination target to stop the boost operation of the boost circuit 20a.

The potential controller 102 acquires the voltage values on the input and output sides of the target boost circuit through the voltage sensors 12a and 16. The potential controller 102 performs the control such that the voltage on the output side of the target boost circuit is greater than or equal to the voltage on the input side of the target boost circuit, namely, the potential controller 102 controls the voltage at the connection unit 30 (S106). Therefore, the potential controller 102 performs the control such that the potential on the cathode side of the diode included in the target boost circuit is greater than or equal to the potential on the anode side. For example, the photovoltaic string 200a does not output the current in the case that the switch Tra of the boost circuit 20a is in the off state while the potential on the cathode side of the diode Da is greater than or equal to the potential on the anode side. Therefore, the voltage value detected by the voltage sensor 12a corresponds to the open-circuit voltage value of the photovoltaic string 200a.

During the off period of the switch of the target boost circuit, the open-circuit voltage value acquisition unit 104 acquires the open-circuit voltage value through the voltage sensor provided on the input side of the target boost circuit (S108). For example, the open-circuit voltage value acquisition unit 104 acquires the first open-circuit voltage value through the voltage sensor 12a, when the switch Tra of the boost circuit 20a is in the off period while the voltage on the output side of the boost circuit 20a, namely, the voltage at the connection unit 30 is controlled greater than or equal to the voltage on the input side of the boost circuit 20a.

The power supply abnormality determination unit 106 determines whether the photovoltaic string of the determination target has the abnormality by comparing the acquired open-circuit voltage value to the reference voltage value corresponding to the photovoltaic string of the determination target (S110). After the determination is ended, the control device 100 determines whether the determination of the abnormality is made for all the photovoltaic strings (S112). When the determination of the abnormality is not made for all the photovoltaic strings, the control device 100 repeats the pieces of processing from Step S102 to Step S110. For example, the control device 100 determines whether the photovoltaic string 200b has the abnormality, after determines whether the photovoltaic string 200a has the abnormality.

The power supply abnormality determination unit 106 may determine whether the photovoltaic string of the determination target has the abnormality based on the plurality of open-circuit voltage values stored in the storage unit 114 and the reference voltage value every time the open-circuit voltage value acquisition unit 104 acquires the open-circuit voltage value. The power supply abnormality determination unit 106 calculates an average value of the plurality of open-circuit voltage values, and determines whether the photovoltaic string of the determination target has the abnormality based on the comparison between the average value and the reference voltage value. The power supply abnormality determination unit 106 may determine that the photovoltaic string of the determination target has the abnormality, when the difference between the acquired open-circuit voltage value and the reference voltage value is greater than or equal to the fixed reference difference, and when the condition related to the meteorological information on the illuminance in acquiring the open-circuit voltage value agrees with the condition related to the meteorological information on the illuminance correlated with the reference voltage value. For example, the power supply abnormality determination unit 106 may determine that the photovoltaic string of the determination target has the abnormality, when the difference between the acquired open-circuit voltage value and the reference voltage value is greater than or equal to the fixed reference difference, and when the illuminance in acquiring the open-circuit voltage value falls within a reference illuminance range that is fixed based on the illuminance in deciding the reference voltage value.

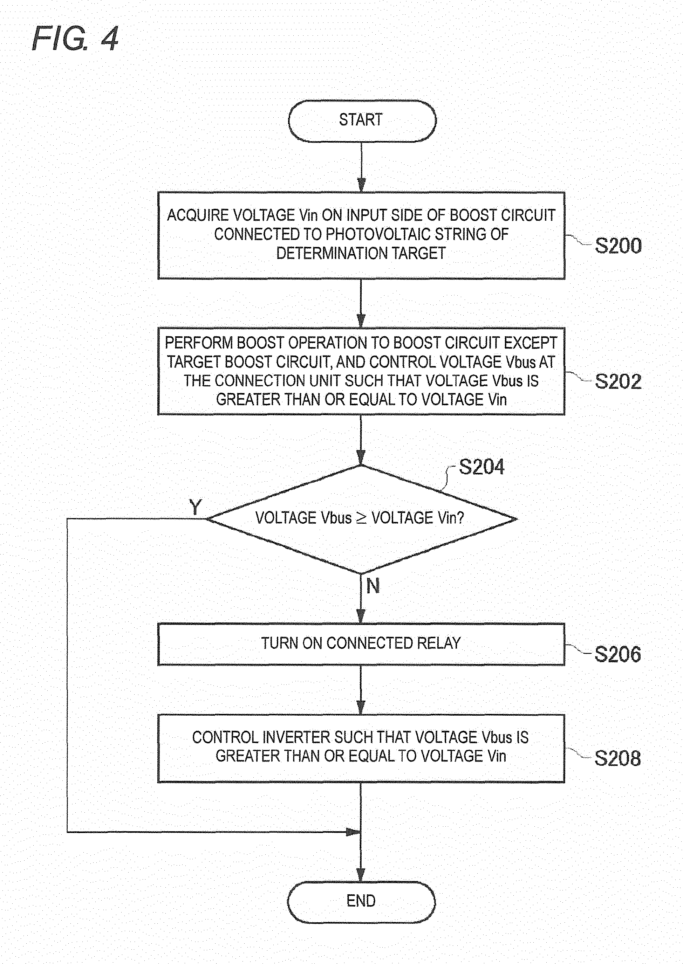

Fig. 4 is a flowchart illustrating an example of a procedure in which the potential controller 102 performs the control such that the voltage at the connection unit 30 is greater than or equal to the voltage on the input side of the target boost circuit connected to the photovoltaic string of the determination target.

The potential controller 102 acquires a voltage Vin on the input side of the boost circuit connected to the photovoltaic string of the determination target (S200). The potential controller 102 performs the boost operation to the boost circuit except the target boost circuit, and performs the control such that a voltage Vbus at the connection unit 30 is greater than or equal to the voltage Vin (S202). The potential controller 102 determines whether the voltage Vbus becomes greater than or equal to the voltage Vin by the boost operation of the boost circuit except the target boost circuit (S204).

For example, sometimes the output of the photovoltaic string connected to the boost circuit except the target boost circuit has the low output because the illuminance is low for the photovoltaic string, and the voltage Vbus at the connection unit 30 cannot be controlled greater than or equal to the voltage Vin on the input side of the boost circuit connected to the photovoltaic string of the determination target by the boost operation of the boost circuit except the target boost circuit. In such cases, the potential controller 102 turns on the connected relay 50 to electrically connect the power conditioner 10 and the system power supply 300 (S206). The potential controller 102 controls the inverter 40, and performs the control such that the voltage Vbus is greater than or equal to the voltage Vin using the power supplied from the system power supply 300 (S208). For example, the potential controller 102 performs the PWM control to each switch included in the inverter 40 such that the current output from the inverter 40 is opposite in phase to the AC voltage at the system power supply 300. Through the above processing, the potential controller 102 can perform the control such that the voltage Vbus is greater than or equal to the voltage Vin.

In the embodiment, the power conditioner 10 includes the two boost circuits by way of example. Alternatively, the power conditioner 10 may include at least three boost circuits. In the case that the power conditioner 10 includes three boost circuits, while the potential controller 102 turns off the switch included in the target boost circuit connected to the photovoltaic string of the determination target in the three boost circuits, the potential controller 102 may perform the boost operation to one of the boost circuits except the target boost circuit in the three boost circuits such that the voltage Vbus at the connection unit 30 is greater than or equal to the voltage Vin.

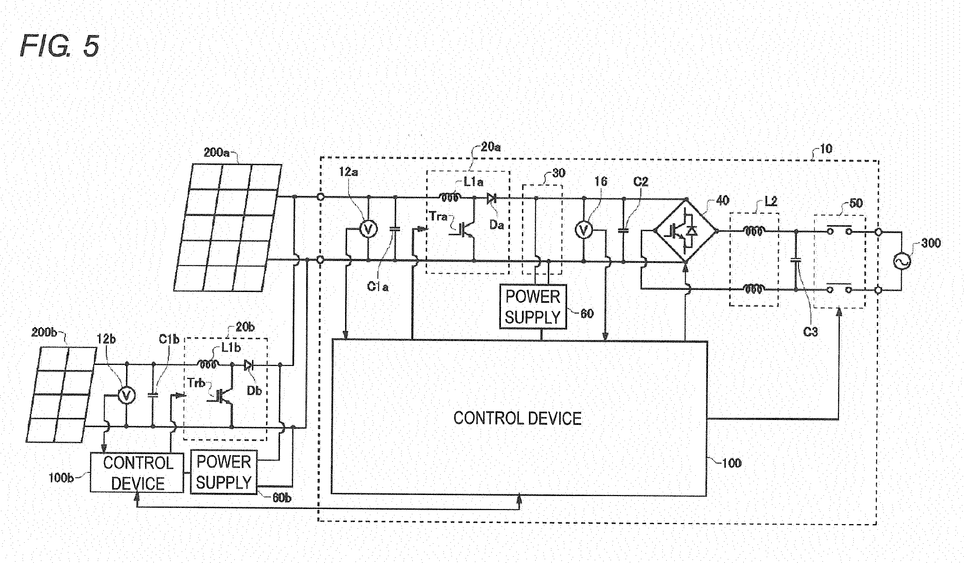

Fig. 5 is a system configuration diagram illustrating an example of an entire configuration of a photovoltaic system according to a first modification of the embodiment. The photovoltaic system of the first modification differs from the photovoltaic system in Fig. 1 in that the boost circuit 20b is provided outside the power conditioner 10. The photovoltaic system of the first modification also differs from the photovoltaic system in Fig. 1 in that the photovoltaic system of the first modification includes a control device 100b that acquires the open-circuit voltage value of the photovoltaic string 200b and a power supply 60b that supplies the driving power to the control device 100b.

The output side of the boost circuit 20b that boosts the DC voltage output from the photovoltaic string 200b is connected to the input side of the boost circuit 20a provided in the power conditioner 10. The power supply 60b is connected to both the ends on the output side of the boost circuit 20b. The power supply 60b generates the power indicating the predetermined voltage value from the DC voltage taken out from the output side of the boost circuit 20b, and supplies the generated power to the control device 100b.

The control device 100b conducts communication with the control device 100 in the wireless or wired manner. Similarly to the control device 100, the control device 100b may include the microcomputer and the wireless antenna. After stopping the boost operation of the boost circuit 20b to turn off the switch Trb in response to a request from the control device 100, the control device 100b acquires the second open-circuit voltage value of the photovoltaic string 200b through the voltage sensor 12b, and transmits the acquired second open-circuit voltage value to the control device 100. Based on the comparison between the acquired second open-circuit voltage value and the previously-stored second reference voltage value, the control device 100b may determine whether the photovoltaic string 200b has the abnormality, and transmit the determination result to the control device 100.

At this point, the output of the photovoltaic string 200b is less than that of the photovoltaic string 200a. The photovoltaic modules constituting the photovoltaic strings 200a and 200b may differ from each other in specifications. On the other hand, when the photovoltaic modules constituting the photovoltaic strings 200a and 200b are identical to each other in specifications, the number of photovoltaic module constituting the photovoltaic string 200b may be less than the number of photovoltaic modules constituting the photovoltaic string 200a.

In the case that the photovoltaic strings 200a and 200b are constructed as described above, the voltage output from the photovoltaic string 200a is greater than that output from the photovoltaic string 200b. Therefore, the voltage on the output side of the boost circuit 20b is greater than that on the input side of the boost circuit 20b while the boost operation of the boost circuit 20b is stopped. In this case, when the switch Trb of the boost circuit 20b is turned off, the voltage value on the input side of the boost circuit 20b is detected without controlling the voltage on the output side of the boost circuit 20b, which allows the detection of the second open-circuit voltage value of the photovoltaic string 200b.

The voltage on the output side of the boost circuit 20b does not fluctuate largely because the output side of the boost circuit 20b is maintained at the voltage higher than that on the input side of the boost circuit 20b. Accordingly, the power supply 60b can stably supply the power to the control device 100b without controlling the voltage on the output side of the boost circuit 20b.

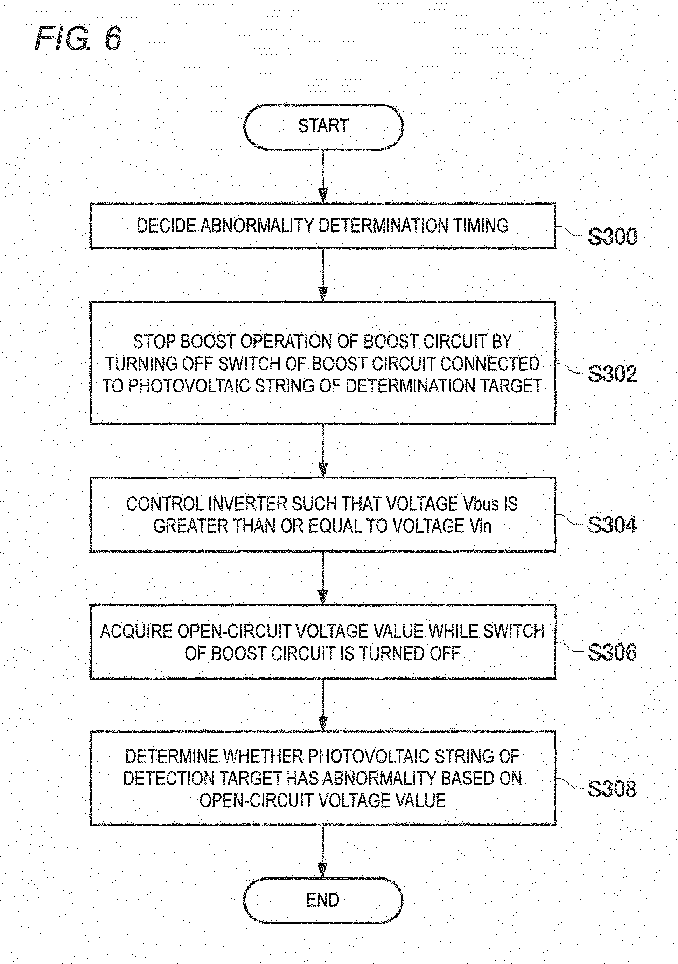

Fig. 6 is a flowchart illustrating an example of a procedure in which the control device 100 of the first modification of the embodiment determines whether the photovoltaic string has the abnormality.

The timing decision unit 112 decides the timing of abnormality determination based on the reception of the message indicating the abnormality determination request from the external management device, the meteorological condition, the outputs of the photovoltaic strings 200a and 200b, or the output power or the internal temperature of the power conditioner 10 (S300). The potential controller 102 turns off the switches Tra and Trb of the boost circuits 20a and 20b connected to the photovoltaic strings of the determination targets, and stops the boost operations of the boost circuits 20a and 20b (S302). For example, the potential controller 102 transmits a message stopping the boost operation of the boost circuit 20b to the control device 100b through the transmitter/receiver 110, and the control device 100b may stop the boost operation of the boost circuit 20b.

The potential controller 102 controls the inverter 40 such that the current output from the inverter 40 is opposite in phase to the output voltage at the system power supply 300, and the potential controller 102 performs the control such that the voltage Vbus at the connection unit 30 is greater than or equal to the voltage Vin on the input side of the boost circuit 20a using the power output from the system power supply 300 (S304).

The open-circuit voltage value acquisition unit 104 acquires the open-circuit voltage values through the voltage sensors 12a and 12b provided on the input sides of the boost circuits 20a and 20b during the off periods of the switches Tra and Trb of the boost circuits 20a and 20b (S306). More specifically, during the off period of the switch Tra of the boost circuit 20a, the open-circuit voltage value acquisition unit 104 acquires the first open-circuit voltage value of the photovoltaic string 200a through the voltage sensor 12a. The open-circuit voltage value acquisition unit 104 transmits a message making a request for the second open-circuit voltage value of the photovoltaic string 200b to the control device 100b through the transmitter/receiver 110. In response to the message, the control device 100b acquires the second open-circuit voltage value of the photovoltaic string 200b through the voltage sensor 12b and transmits the second open-circuit voltage value to the control device 100 during the off period of the switch Trb of the boost circuit 20b.

The power supply abnormality determination unit 106 determines whether each photovoltaic string has the abnormality by the comparison between the acquired open-circuit voltage value and the reference voltage value corresponding to the open-circuit voltage value (S308).

As described above, in the photovoltaic system of the first modification, even if the boost circuits are provided inside and outside of the power conditioner 10, whether each of the photovoltaic strings has the abnormality can be determined by acquiring the open-circuit voltage value of the photovoltaic string connected to each boost circuit.

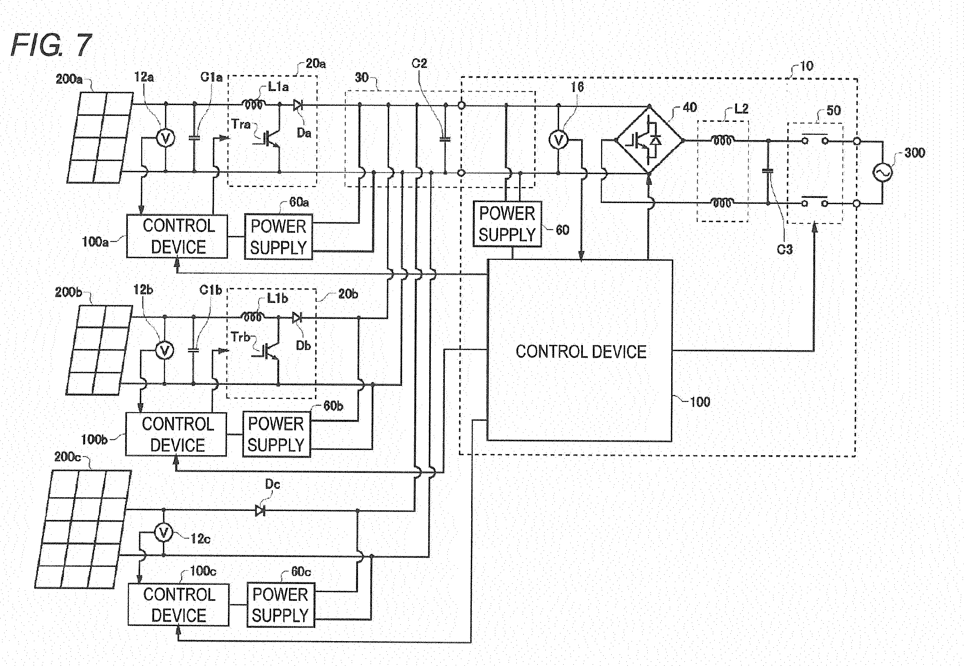

Fig. 7 is a system configuration diagram illustrating an example of an entire configuration of a photovoltaic system according to a second modification of the embodiment. The photovoltaic system of the second modification differs from the photovoltaic system in Fig. 1 in that the boost circuits 20a and 20b and the capacitor C2 are provided outside the power conditioner 10. The photovoltaic system of the second modification also differs from the photovoltaic system in Fig. 1 in that the photovoltaic system includes a control device 100a, a power supply 60a, a photovoltaic string 200c, a power supply 60c, and a control device 100c and that the photovoltaic string 200c is connected to the power conditioner 10 not through the boost circuit. The unit including the control device 100a, the capacitor C1a, the power supply 60a, and the voltage sensor 12a is an example of a boost unit.

The photovoltaic strings 200a, 200b, and 200c are connected in parallel to one another with the connection unit 30 interposed thereamong. A diode Dc is provided between the photovoltaic string 200c and the power conditioner 10. The diode Dc is an example of the backflow prevention circuit that prevents the current from flowing onto the side of the photovoltaic string 200c from the side of the power conditioner 10. The output side of the boost circuit 20a, the output side of the boost circuit 20b, and the output side of the photovoltaic string 200c through the diode Dc are connected in parallel to one another by a part of the connection unit 30 provided outside the power conditioner 10.

The power supplies 60a and 60c generate the power, which indicates the predetermined voltage values and is supplied to the control device 100a or 100c, from the DC voltage taken out from the connection unit 30, and the power supplies 60a and 60c supply the generated power to the control device 100a or 100c.

The control devices 100a and 100c may conduct communication with the control device 100 in the wireless or wired manner. Similarly to the control device 100, the control devices 100a and 100c may include the microcomputer and the wireless antenna. In response to the request from the control device 100, the control devices 100a and 100c acquires the open-circuit voltage value of the photovoltaic string 200a or 200c through the voltage sensor 12a or 12c, and transmits the acquired open-circuit voltage value to the control device 100. Based on the comparison between the acquired open-circuit voltage value and the previously-stored second reference voltage value, the control device 100a or 100c may determine whether the photovoltaic string 200a or 200c has the abnormality, and transmit the determination result to the control device 100.

The control device 100 acquires the voltage values of the photovoltaic strings from the control devices 100a, 100b, and 100c, and performs control such that the voltage value at both the ends of the connection unit 30 is greater than or equal to the maximum voltage value in the acquired voltage values. More specifically, the control device 100 controls each switch included in the inverter 40 such that the current output from the inverter 40 is opposite in phase to the output voltage at the system power supply 300, supplies the power from the system power supply 300 onto the side of the connection unit 30 through the inverter 40, and performs the control such that the voltage value at both the ends of the connection unit 30 is greater than or equal to the maximum voltage value. Therefore, the open-circuit voltage values of the photovoltaic strings 200a, 200b, and 200c can more exactly be detected without physically disconnecting the photovoltaic strings 200a, 200b, and 200c from the power conditioner 10.

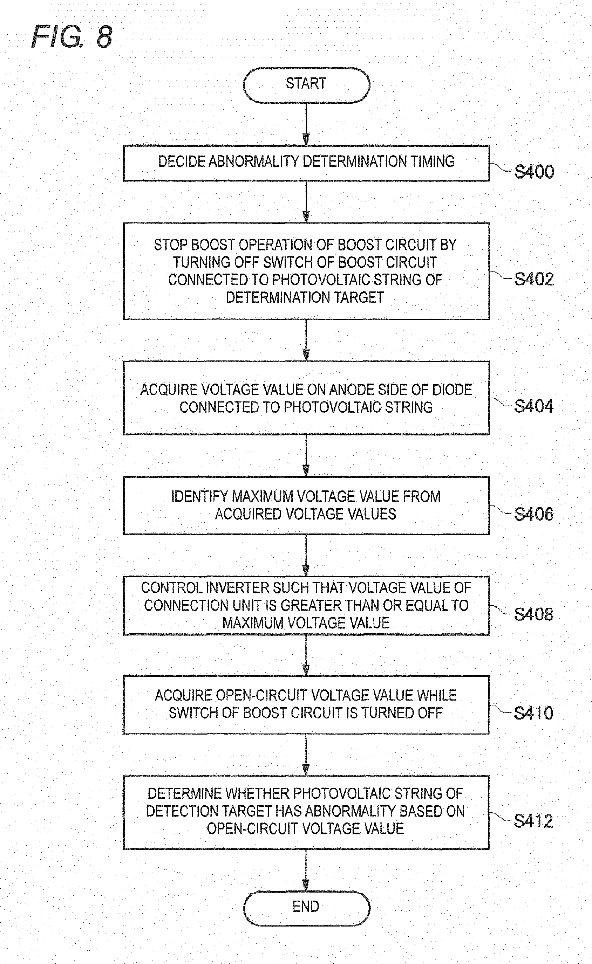

Fig. 8 is a flowchart illustrating an example of a procedure in which the control device 100 of the second modification determines whether the photovoltaic string has the abnormality.

The timing decision unit 112 decides the timing of abnormality determination based on the reception of the message indicating the abnormality determination request from the outside, the meteorological condition, the outputs of the photovoltaic strings 200a, 200b, and 200c, or the output power or the internal temperature of the power conditioner 10 (S400).

The potential controller 102 turns off the switches of the boost circuits connected to the photovoltaic strings of the determination targets, and stops the boost operations of the boost circuits (S402). For example, the potential controller 102 transmits the message stopping the boost operations of the boost circuits 20a and 20b to the control devices 100a and 100b through the transmitter/receiver 110, and the control devices 100a and 100b may stop the boost operations of the boost circuits 20a and 20b.

The open-circuit voltage value acquisition unit 104 acquires the voltage values on the anode sides of the diodes Da, Db, and Dc, which are connected between the photovoltaic strings 200a, 200b, and 200c and the power conditioner 10, through the control devices 100a, 100b, and 100c (S404). The control device 100a is driven by the power from the power supply 60a, the control device 100b is driven by the power from the power supply 60b, and the control device 100c is driven by the power from the power supply 60c. The open-circuit voltage value acquisition unit 104 acquires the voltage value on the input sides of the boost circuit 20a, the voltage value on the input sides of the boost circuit 20b, and the voltage value on the anode sides of the diode Dc. The voltage value on the input sides of the boost circuit 20a, the voltage value on the input sides of the boost circuit 20b, and the voltage value on the anode sides of the diode Dc are acquired by the control devices 100a, 100b, and 100c through the voltage sensors 12a, 12b, and 12c.

The potential controller 102 identifies the maximum voltage value from the acquired voltage values (S406). The potential controller 102 controls the inverter 40 to output the power from the system power supply 300 onto the side of the connection unit 30 through the inverter 40, whereby the potential controller 102 performs the control such that the voltage value at both the ends of the connection unit 30 is greater than or equal to the identified maximum voltage value (S408).

The open-circuit voltage value acquisition unit 104 acquires the voltage value on the input sides of the boost circuit 20a, the voltage value on the input sides of the boost circuit 20b, and the voltage value on the anode sides of the diode Dc as the open-circuit voltage values while the switches Tra and Trb of the boost circuits 20a and 20b are turned off (S410). The voltage value on the input sides of the boost circuit 20a, the voltage value on the input sides of the boost circuit 20b, and the voltage value on the anode sides of the diode Dc are acquired by the control devices 100a, 100b, and 100c through the voltage sensors 12a, 12b, and 12c.

The power supply abnormality determination unit 106 determines whether the photovoltaic strings 200a, 200b, and 200c have the abnormality based on the comparison between each open-circuit voltage value and the reference voltage value corresponding to the open-circuit voltage value(S412).

In the photovoltaic system of the second modification, even if the boost circuits are provided outside the power conditioner 10, and even if the photovoltaic string is connected to the power conditioner 10 not through the boost circuit, whether each of the photovoltaic strings has the abnormality can be determined by acquiring the open-circuit voltage value of the photovoltaic string.

In the plurality of photovoltaic strings, sometimes only one photovoltaic string has the output higher than other photovoltaic strings such the case that the one photovoltaic string has the largest number of photovoltaic modules. In such cases, the voltage value of the connection unit 30 may be controlled so as to be greater than or equal to the voltage value on the anode side of the diode connected to the photovoltaic string that is previously identified as the photovoltaic string having the maximum output. Therefore, in this case, the pieces of processing in Steps S404 and S406 in Fig. 8 may be eliminated.

The open-circuit voltage value acquisition unit 104 may separately acquire the open-circuit voltage values of the photovoltaic strings 200a, 200b, and 200c. In the case that the first open-circuit voltage value of the photovoltaic string 200a is acquired, the potential controller 102 may control the inverter 40 or the switch of the boost circuit 20b, and thereby performing the control such that the voltage value at both the ends of the connection unit 30 is greater than or equal to the voltage value on the input side of the boost circuit 20a. In the case that the second open-circuit voltage value of the photovoltaic string 200b is acquired, the potential controller 102 may control the inverter 40 or the switch of the boost circuit 20a, and thereby performing the control such that the voltage value at both the ends of the connection unit 30 is greater than or equal to the voltage value on the input side of the boost circuit 20b. In the case that a third open-circuit voltage value which is the open-circuit voltage value of the photovoltaic string 200c is acquired, the potential controller 102 may control the inverter 40 or the switch of the boost circuit 20a or 20b, and thereby performing the control such that the voltage value at both the ends of the connection unit 30 is greater than or equal to the voltage value on the anode side of the diode Dc.

As described above, in each of the above photovoltaic systems, using the boost circuit or inverter provided in the power conditioner 10, the potential on the cathode side of the diode is controlled so as to be greater than or equal to the potential on the anode side of the diode that is of the backflow prevention circuit connected between the photovoltaic string and the power conditioner 10. In the case that the boost circuit is connected to the photovoltaic string, the switch of the boost circuit is turned off. The current is not passed from the photovoltaic string through the diode or the switch of the boost circuit. For this reason, the voltage value at both the ends of the photovoltaic string can be detected while the current is not passed from the photovoltaic string. That is, the open-circuit voltage value of the photovoltaic string can be detected.

According to each of the photovoltaic systems, the open-circuit voltage value of the photovoltaic string can exactly be detected without physically disconnecting the photovoltaic string and the power conditioner from each other. Therefore, for example, whether photovoltaic string has the abnormality can be inspected based on the open-circuit voltage value of the photovoltaic string by remote operation while a checker does not visit an installation site of the photovoltaic string.

In the case that the power conditioner 10 includes the plurality of boost circuits, the voltage control operation to control the voltage at the connection unit 30 greater than or equal to the voltage on the input side of the target boost circuit connected to the photovoltaic string of the determination target can be performed by the boost operation of another booster circuit in which the power is supplied from the photovoltaic string except the photovoltaic string of the determination target. Therefore, the consumption of the power from the system power supply 300 in association with the voltage control operation can be reduced as little as possible.

A program, which is stored in a computer-readable recording medium to perform various pieces of processing related to the acquisition of the open-circuit voltage value and the abnormality determination of the photovoltaic string, is installed in a computer, and each unit included in the control device 100 may be constructed by causing the computer to execute the program. That is, the computer is caused to execute the program to perform various pieces of processing related to the acquisition of the open-circuit voltage value and the abnormality determination of the photovoltaic string, and the computer acts as each unit included in the control device 100, whereby the control device 100 may be constructed.

The computer includes a CPU, various memories such as a ROM, a RAM, and an EEPROM (registered trademark), a communication bus, and an interface, and the CPU reads the processing program stored in the ROM as firmware, whereby the computer acts as the control device 100.

In the performance sequence of pieces of processing such as the operations, the procedures, the steps, and the stages in the device, the system, the program, and the method in the claims, the description, and the drawings, "before" or "prior to" is not described unless otherwise noted, and it is noted that the pieces of processing are performed in any performance sequence as long as the output of the preceding processing is used in the subsequent processing. In the operation flow of the claims, the description, and the drawings, for the sake of convenience, it is not always necessary that the pieces of processing be performed in this order even if "at first" or "then" is used.

## Claims

1. A power conditioner (10) that is configured to boost a direct current output from a first power supply (200a) being a first photovoltaic cell, a first photovoltaic module in which first photovoltaic cells are connected in series or parallel, or a first fuel cell, to convert the boosted direct current into an alternating current, and to output the alternating current onto a side of a system power supply (300), the power conditioner (10) comprising:
a first boost circuit (20a) that comprises a first switch (Tra) connected between output terminals of the first power supply (200a), a first coil (L1a) or first transformer winding configured to boost a voltage from the first power supply (200a) by turning on and off the first switch (Tra), and a first backflow prevention circuit (Da) configured to rectify an output from the first coil (L1a) or the first transformer winding;
a second boost circuit (20b) configured to boost a voltage at a second power supply (200b) being a second photovoltaic cell, a second photovoltaic module in which second photovoltaic cells are connected in series or parallel, or a second fuel cell;
a connection unit (30) configured to connect an output side of the first boost circuit (20a) and an output side of the second boost circuit (20b) in parallel with each other,
a potential controller (102) configured to perform control such that a potential at the first backflow prevention circuit (Da) on the side opposite to the first power supply (200a) is greater than or equal to a potential at the first backflow prevention circuit (Da) on the side of the first power supply (200a) during an off period of the first switch (Tra);
an open-circuit voltage value acquisition unit (104) configured to acquire a first open-circuit voltage value of the first power supply (200a), when the first switch (Tra) is in the off period while the potential controller (102) performs the control such that the voltage at the first backflow prevention circuit (Da) on the side opposite to the first power supply (200a) is greater than or equal to the voltage at the first backflow prevention circuit (Da) on the side of the first power supply (200a); and
a power supply abnormality determination unit (106) configured to determine whether the first power supply (200a) has an abnormality based on comparison between the first open-circuit voltage value and a first reference voltage value that is previously fixed based on a characteristic of the first power supply (200a),
wherein the potential controller (102) is adapted to perform the control such that the voltage at the connection unit (30) is greater than or equal to the voltage on an input side of the first boost circuit (20a) by turning on and off a second switch (Trb) included in the second boost circuit (20b) when the open-circuit voltage value acquisition unit (104) acquires the first open-circuit voltage value, so that the potential controller (102) is adapted to perform the control such that the potential at the first backflow prevention circuit (Da) on the side opposite to the first power supply (200a) is greater than or equal to the potential at the first backflow prevention circuit (Da) on the side of the first power supply (20a).

2. The power conditioner (10) according to claim 1, further comprising:
an inverter (40) configured to convert the direct current output from the first boost circuit (20a) into the alternating current, and to output the alternating current onto the side of the system power supply (300);
said connection unit (30) being configured to connect said output side of the first boost circuit (20a) and an input side of the inverter (40),
wherein the potential controller (102) is adapted to output a power from the system power supply (300) onto the side of the connection unit (30) to set the voltage at the connection unit (30) to at least the voltage on an input side of the first boost circuit (20a) by controlling the inverter (40) when the open-circuit voltage value acquisition unit (104) acquires the first open-circuit voltage value, so that the potential controller (102) is adapted to perform the control such that the potential at the first backflow prevention circuit (Da) on the side opposite to the first power supply (200a) is greater than or equal to the potential at the first backflow prevention circuit (Da) on the side of the first power supply (200a).

3. The power conditioner (10) according to claim 1, further comprising:
an inverter (40) configured to convert the direct current output from the connection unit (30) into the alternating current, and to output the alternating current onto the side of a system power supply (300),
wherein the potential controller (102) is adapted to output a power from the system power supply (300) onto the side of the connection unit (30) to set the voltage at the connection unit (30) to at least the voltage on the input side of the first boost circuit (20a) by controlling the inverter (40) when the potential controller (102) cannot perform the control such that the voltage at the connection unit (30) is greater than or equal to the voltage on the input side of the first boost circuit (20a) by turning on and off the second switch (Trb) included in the second boost circuit (20b), so that the potential controller (102) is adapted to perform the control such that the potential at the first backflow prevention circuit (Da) on the side opposite to the first power supply (200a) is greater than or equal to the potential at the first backflow prevention circuit (Da) on the side of the first power supply (200a).

4. The power conditioner (10) according to any one of claims 1 and 3, wherein the second boost circuit (20b) comprises: a second coil (L1b) or second transformer winding configured to boost the voltage from the second power supply (200b) by turning on and off the second switch (Trb); and a second backflow prevention circuit (Db) configured to rectify the output from the second coil (L1b) or the second transformer winding,
wherein the potential controller (102) is adapted to perform the control such that the potential at the second backflow prevention circuit (Db) on the side opposite to the second power supply (200b) is greater than or equal to the potential at the second backflow prevention circuit (Db) on the side of the second power supply (200b) during the off period of the second switch (Trb),
wherein the open-circuit voltage value acquisition unit (104) is adapted to acquire a second open-circuit voltage value of the second power supply (200b), when the second switch (Trb) is in the off period while the potential controller (102) performs the control such that the voltage at the second backflow prevention circuit (Db) on the side opposite to the second power supply (200b) is greater than or equal to the voltage at the second backflow prevention circuit (Db) on the side of the second power supply (200b), and
wherein the power supply abnormality determination unit (106) is adapted to determine whether the second power supply (200b) has the abnormality based on the comparison between the second open-circuit voltage value and a second reference voltage value that is previously fixed based on the characteristic of the second power supply (200b).

5. A power conditioner (10) that is configured to boost a direct current output from a first power supply (200a) being a first photovoltaic cell, a first photovoltaic module in which first photovoltaic cells are connected in series or parallel, or a first fuel cell, to convert the boosted direct current into an alternating current, and to output the alternating current onto a side of a system power supply (300), the power conditioner (10) comprising:
a first boost circuit (20a) that comprises a first switch (Tra) connected between output terminals of the first power supply (200a), a first coil (L1a) or first transformer winding configured to boost a voltage from the first power supply (200a) by turning on and off the first switch (Tra), and a first backflow prevention circuit (Da) configured to rectify an output from the first coil (L1a) or the first transformer winding;
an inverter (40) configured to convert the direct current output from the first boost circuit (20a) into the alternating current, and to output the alternating current onto the side of the system power supply (300);
a connection unit (30) configured to connect the output side of the first boost circuit (20a) and the input side of the inverter (40);
a potential controller (102) configured to output a power from the system power supply (300) onto the side of the connection unit (30) to set the voltage at the connection unit (30) to at least the voltage on an input side of the first boost circuit (20a) by controlling the inverter (40) during an off period of the first switch (Tra), so that the potential controller is adapted to perform control such that a potential at the first backflow prevention circuit (Da) on the side opposite to the first power supply (200a) is greater than or equal to the potential at the first backflow prevention circuit (Da) on the side of the first power supply (200a);
an open-circuit voltage value acquisition unit (104) configured to acquire a first open-circuit voltage value of the first power supply (200a), when the first switch (Tra) is in the off period while the potential controller performs (102) the control such that the voltage at the first backflow prevention circuit (Da) on the side opposite to the first power supply (200a) is greater than or equal to the voltage at the first backflow prevention circuit (Da) on the side of the first power supply (200a); and
a power supply abnormality determination unit (106) configured to determine whether the first power supply (200a) has an abnormality based on comparison between the first open-circuit voltage value and a first reference voltage value that is previously fixed based on a characteristic of the first power supply (200a).

6. A photovoltaic system comprising:
said first photovoltaic cell that is of the first power supply (200a); and
the power conditioner (10) according to any one of claims 1 to 5 configured to convert the direct current from the first photovoltaic cell into the alternating current and to output the alternating current onto the side of the system power supply (300).

7. A photovoltaic system comprising:
said first photovoltaic cell that is of the first power supply (200a);
said second photovoltaic cell that is of the second power supply (200b) connected in parallel to the first photovoltaic cell; and
the power conditioner (10) according to any one of claims 1, 3, and 4 configured to convert the direct currents from the first and second photovoltaic cells into the alternating currents and to output the alternating currents onto the side of the system power supply (300).

8. An abnormality determination method for making an abnormality determination of a first power supply (200a) being a first photovoltaic cell, a first photovoltaic module in which first photovoltaic cells are connected in series or parallel, or a first fuel cell, connected to a power conditioner (10) configured to boost a direct current output from the first power supply (200a), to convert the boosted direct current into an alternating current, and to output the alternating current onto a side of a system power supply (300), the power conditioner (10) comprising a first boost circuit (20a) that comprises a first switch (Tra) connected between output terminals of the first power supply (200a), a first coil (L1a) or a first transformer winding configured to boost a voltage from the first power supply (200a) by turning on and off the first switch (Tra), and a first backflow prevention circuit (Da) configured to rectify an output from the first coil (L1a) or the first transformer winding, a second boost circuit (20b) that comprises a second switch (Trb) connected between output terminals of a second power supply (200b) being a second photovoltaic cell, a second photovoltaic module in which second photovoltaic cells are connected in series or parallel, or a second fuel cell, the second boost circuit (20b) boosting the direct current from the second power supply (200b) by turning on and off the second switch (Trb); and a connection unit (30) configured to connect an output side of the first boost circuit (20a) and an output side of the second boost circuit (20b) in parallel with each other,
the abnormality determination method comprising the following steps of:
performing control such that a potential at the first backflow prevention circuit (Da) on the side opposite to the first power supply (200a) is greater than or equal to a potential at the first backflow prevention circuit (Da) on the side of the first power supply (200a) during an off period of the first switch (Tra);
acquiring a first open-circuit voltage value of the first power supply (200a), when the first switch (Tra) is in the off period while performing the control such that the voltage at the first backflow prevention circuit (Da) on the side opposite to the first power supply (200a) is greater than or equal to the voltage at the first backflow prevention circuit (Da) on the side of the first power supply (200a); and
determining whether the first power supply (200a) has an abnormality based on comparison between the first open-circuit voltage value and a first reference voltage value that is previously fixed based on a characteristic of the first power supply (200a), wherein
in the control step, the control is performed such that the voltage at the connection unit (30) is greater than or equal to the voltage on an input side of the first boost circuit (20a) by turning on and off the second switch (Trb) when the first open-circuit voltage value is acquired, so that the control is performed such that the potential at the first backflow prevention circuit (Da) on the side opposite to the first power supply (200a) is greater than or equal to the potential at the first backflow prevention circuit (Da) on the side of the first power supply (200a).

9. The abnormality determination method according to claim 8, wherein the power conditioner (10) comprises:
an inverter (40) configured to convert the direct current output from the first boost circuit (20a) into the alternating current, and to output the alternating current onto the side of the system power supply (300); and
a connection unit (30) configured to connect an output side of the first boost circuit (20a) and an input side of the inverter (40), wherein
in the control step, a power is output from the system power supply (300) onto the side of the connection unit (30) to set the voltage at the connection unit (30) to at least the voltage on the input side of the first boost circuit (20a) by controlling the inverter (40) when the first open-circuit voltage value is acquired, so that the control is performed such that the potential at the first backflow prevention circuit (Da) on the side opposite to the first power supply (200a) is greater than or equal to the potential at the first backflow prevention circuit (Da) on the side of the first power supply (20b).

10. The abnormality determination method according to claim 8, wherein
the power conditioner (10) comprises an inverter (40) that is connected to the output side of the first boost circuit (20a) with the connection unit (30) interposed therebetween, the inverter (40) converting the direct current output from the first boost circuit (20a) into the alternating current, and outputting the alternating current onto the side of the system power supply (300), wherein
in the control step, a power is output from the system power supply (300) onto the side of the connection unit (30) to set the voltage at the connection unit (30) to at least the voltage on the input side of the first boost circuit (20a) by controlling the inverter (40) when the control cannot be performed such that the voltage at the connection unit (30) is greater than or equal to the voltage on the input side of the first boost circuit (20a) by turning on and off the second switch (Trb), so that the control is performed such that the potential at the first backflow prevention circuit (Da) on the side opposite to the first power supply (200a) is greater than or equal to the potential at the first backflow prevention circuit (Da) on the side of the first power supply (200a).

11. An abnormality determination method for making an abnormality determination of a first power supply (200a) being a first photovoltaic cell, a first photovoltaic module in which first photovoltaic cells are connected in series or parallel, or a first fuel cell, connected to a power conditioner (10) configured to boost a direct current output from the first power supply (200a), to convert the boosted direct current into an alternating current, and to output the alternating current onto a side of a system power supply (300), the power conditioner (10) comprising a first boost circuit (20a) that comprises a first switch (Tra) connected between output terminals of the first power supply (200a), a first coil (L1a) or first transformer winding configured to boost a voltage from the first power supply (200a) by turning on and off the first switch (Tra), and a first backflow prevention circuit (Da) configured to rectify an output from the first coil (L1a) or the first transformer winding; an inverter (40) configured to convert the direct current output from the first boost circuit (20a) into the alternating current, and to output the alternating current onto the side of the system power supply (300); and a connection unit (30) configured to connect the output side of the first boost circuit (20a) and the input side of the inverter (40);
the abnormality determination method comprising the following steps of:
outputting a power from the system power supply (300) onto the side of the connection unit (30) to set the voltage at the connection unit (30) to at least the voltage on an input side of the first boost circuit (20a) by controlling the inverter (40) during an off period of the first switch (Tra), so that control is performed such that a potential at the first backflow prevention circuit (Da) on the side opposite to the first power supply (200a) is greater than or equal to the potential at the first backflow prevention circuit (Da) on the side of the first power supply (200a);
acquiring a first open-circuit voltage value of the first power supply (200a), when the first switch (Tra) is in the off period while performing the control such that the voltage at the first backflow prevention circuit (Da) on the side opposite to the first power supply (200a) is greater than or equal to the voltage at the first backflow prevention circuit (Da) on the side of the first power supply (200a); and
determining whether the first power supply (200a) has an abnormality based on comparison between the first open-circuit voltage value and a first reference voltage value that is previously fixed based on a characteristic of the first power supply (200a).

## Patentansprüche

1. Leistungsaufbereiter (10), der eingerichtet ist, einen Gleichstromausgang von einer ersten Stromversorgung (200a) zu verstärken, die eine erste photovoltaische Zelle, ein erstes photovoltaisches Modul, in dem erste photovoltaische Zellen in Reihe oder parallel geschaltet sind, oder eine erste Brennstoffzelle ist, um den verstärkten Gleichstrom in einen Wechselstrom umzuwandeln und den Wechselstrom auf eine Seite einer Systemstromversorgung (300) auszugeben, wobei der Leistungsaufbereiter (10) aufweist:
eine erste Verstärkungsschaltung (20a), welche einen ersten Schalter (Tra), der zwischen Ausgangsanschlüssen der ersten Stromversorgung (200a) geschaltet ist, eine erste Spule (L1a) oder eine erste Transformatorwicklung, die eingerichtet ist, eine Spannung von der ersten Stromversorgung (200a) durch Ein- und Ausschalten des ersten Schalters (Tra) zu verstärken, und eine erste Rückflussverhinderungsschaltung (Da), die eingerichtet ist, ein Ausgangssignal von der ersten Spule (L1a) oder der ersten Transformatorwicklung gleichzurichten, umfasst;
eine zweite Verstärkungsschaltung (20b), die eingerichtet ist, eine Spannung an einer zweiten Stromversorgung (200b), die eine zweite Photovoltaikzelle, ein zweites Photovoltaikmodul, in dem zweite Photovoltaikzellen in Reihe oder parallel geschaltet sind, oder eine zweite Brennstoffzelle ist, verstärkt;
eine Verbindungseinheit (30), die eingerichtet ist, eine Ausgangsseite der ersten Verstärkungsschaltung (20a) und eine Ausgangsseite der zweiten Verstärkungsschaltung (20b) parallel zueinander zu verbinden,
eine Potentialsteuerung (102), die eingerichtet ist, das Steuern so durchzuführen, dass ein Potential an der ersten Rückflussverhinderungsschaltung (Da) auf der der ersten Stromversorgung (200a) gegenüberliegenden Seite größer oder gleich einem Potential an der ersten Rückflussverhinderungsschaltung (Da) auf der Seite der ersten Stromversorgung (200a) während einer Aus-Periode des ersten Schalters (Tra) ist;
eine Leerlaufspannungswerterfassungseinheit (104), die eingerichtet ist, einen ersten Leerlaufspannungswert der ersten Stromversorgung (200a) zu erfassen, wenn sich der erste Schalter (Tra) in der Aus-Periode befindet, während die Potentialsteuerung (102) das Steuern so durchführt, dass die Spannung an der ersten Rückflussverhinderungsschaltung (Da) auf der der ersten Stromversorgung (200a) gegenüberliegenden Seite größer oder gleich der Spannung an der ersten Rückflussverhinderungsschaltung (Da) auf der Seite der ersten Stromversorgung (200a) ist; und
eine Stromversorgungsanomalie-Bestimmungseinheit (106), die eingerichtet ist, zu bestimmen, ob die erste Stromversorgung (200a) eine Anomalie aufweist, basierend auf einem Vergleich zwischen dem ersten Leerlaufspannungswert und einem ersten Referenzspannungswert, der zuvor basierend auf einer Charakteristik der ersten Stromversorgung (200a) festgelegt wird,
wobei die Potentialsteuerung (102) ausgelegt ist, das Steuern so durchzuführen, dass die Spannung an der Verbindungseinheit (30) größer oder gleich der Spannung auf einer Eingangsseite der ersten Verstärkerschaltung (20a) ist, indem sie einen zweiten Schalter (Trb), den die zweite Verstärkerschaltung (20b) umfasst, ein- und ausschaltet, wenn die Leerlaufspannungswerterfassungseinheit (104) den ersten Leerlaufspannungswert erfasst, so dass die Potentialsteuerung (102) ausgelegt ist, das Steuern so durchzuführen, dass das Potential auf der ersten Rückflussverhinderungsschaltung (Da) auf der der ersten Stromversorgung (200a) gegenüberliegenden Seite größer oder gleich dem Potential an der ersten Rückflussverhinderungsschaltung (Da) auf der Seite der ersten Stromversorgung (20a) ist.

2. Leistungsaufbereiter (10) gemäß Anspruch 1, ferner aufweisend:
einen Wechselrichter (40), der eingerichtet ist, den von der ersten Verstärkerschaltung (20a) ausgegebenen Gleichstrom in den Wechselstrom umzuwandeln und den Wechselstrom auf der Seite der Systemstromversorgung (300) auszugeben;
wobei die Verbindungseinheit (30) eingerichtet ist, die Ausgangsseite der ersten Verstärkerschaltung (20a) und eine Eingangsseite des Wechselrichters (40) zu verbinden,
wobei die Potentialsteuerung (102) ausgelegt ist, eine Leistung von der Systemstromversorgung (300) auf die Seite der Verbindungseinheit (30) auszugeben, um die Spannung an der Verbindungseinheit (30) auf mindestens die Spannung an einer Eingangsseite der ersten Verstärkungsschaltung (20a) einzustellen, indem der Wechselrichter (40) gesteuert wird, wenn die Leerlaufspannungswerterfassungseinheit (104) den ersten Leerlaufspannungswert erfasst, so dass die Potentialsteuerung (102) ausgelegt ist, das Steuern so durchzuführen, dass das Potential an der ersten Rückflussverhinderungsschaltung (Da) auf der der ersten Energieversorgung (200a) gegenüberliegenden Seite größer oder gleich dem Potential an der ersten Rückflussverhinderungsschaltung (Da) auf der Seite der ersten Energieversorgung (200a) ist.

3. Leistungsaufbereiter (10) gemäß Anspruch 1, ferner aufweisend:
einen Wechselrichter (40), der eingerichtet ist, den von der Verbindungseinheit (30) ausgegebenen Gleichstrom in den Wechselstrom umzuwandeln und den Wechselstrom auf der Seite der Systemstromversorgung (300) auszugeben,
wobei die Potentialsteuerung (102) ausgelegt ist, eine Leistung von der Systemstromversorgung (300) an die Seite der Verbindungsseinheit (30) auszugeben, um die Spannung an der Verbindungsseinheit (30) durch Steuern des Wechselrichters (40) auf mindestens die Spannung auf der Eingangsseite der ersten Verstärkerschaltung (20a) einzustellen, wenn die Potentialsteuerung (102) das Steuern nicht so durchführen kann, dass die Spannung an der Anschlusseinheit (30) größer oder gleich der Spannung auf der Eingangsseite der ersten Verstärkerschaltung (20a) ist, indem der zweite Schalter (Trb), den die zweite Verstärkerschaltung (20b) umfasst, ein- und ausgeschaltet wird, so dass die Potentialsteuerung (102) ausgelegt ist, das Steuern so durchzuführen, dass das Potential an der ersten Rückflussverhinderungsschaltung (Da) auf der der ersten Stromversorgung (200a) gegenüberliegenden Seite größer oder gleich dem Potential an der ersten Rückflussverhinderungsschaltung (Da) auf der Seite der ersten Stromversorgung (200a) ist.

4. Leistungsaufbereiter (10) nach einem der Ansprüche 1 und 3, wobei die zweite Verstärkungsschaltung (20b) aufweist: eine zweite Spule (L1b) oder eine zweite Transformatorwicklung, die eingerichtet ist, die Spannung von der zweiten Stromversorgung (200b) durch Ein- und Ausschalten des zweiten Schalters (Trb) zu verstärken; und eine zweite Rückflussverhinderungsschaltung (Db), die eingerichtet ist, die Ausgabe von der zweiten Spule (L1b) oder der zweiten Transformatorwicklung gleichzurichten,
wobei die Potentialsteuerung (102) ausgelegt ist, das Steuern so durchzuführen, dass das Potential an der zweiten Rückflussverhinderungsschaltung (Db) auf der der zweiten Stromversorgung (200b) gegenüberliegenden Seite größer oder gleich dem Potential an der zweiten Rückflussverhinderungsschaltung (Db) auf der Seite der zweiten Stromversorgung (200b) während der Aus-Periode des zweiten Schalters (Trb) ist,
wobei die Leerlaufspannungswerterfassungseinheit (104) ausgelegt ist, einen zweiten Leerlaufspannungswert der zweiten Stromversorgung (200b) zu erfassen, wenn sich der zweite Schalter (Trb) in der Aus-Periode befindet, während die Potentialsteuerung (102) das Steuern so durchführt, dass die Spannung an der zweiten Rückflussverhinderungsschaltung (Db) auf der der zweiten Stromversorgung (200b) gegenüberliegenden Seite größer oder gleich der Spannung an der zweiten Rückflussverhinderungsschaltung (Db) auf der Seite der zweiten Stromversorgung (200b) ist, und
wobei die Stromversorgungsanomalie-Bestimmungseinheit (106) angepasst ist, zu bestimmen, ob die zweite Stromversorgung (200b) die Anomalie aufweist, basierend auf dem Vergleich zwischen dem zweiten Leerlaufspannungswert und einem zweiten Referenzspannungswert, der zuvor basierend auf der Charakteristik der zweiten Stromversorgung (200b) festgelegt wird.

5. Leistungsaufbereiter (10), der eingerichtet ist, einen Gleichstromausgang von einer ersten Stromversorgung (200a) zu verstärken, die eine erste photovoltaische Zelle, ein erstes photovoltaisches Modul, in dem erste photovoltaische Zellen in Reihe oder parallel geschaltet sind, oder eine erste Brennstoffzelle ist, um den verstärkten Gleichstrom in einen Wechselstrom umzuwandeln und den Wechselstrom an eine Seite einer Systemstromversorgung (300) auszugeben, wobei der Leistungsaufbereiter (10) aufweist:
eine erste Verstärkungsschaltung (20a), welche einen ersten Schalter (Tra), der zwischen Ausgangsanschlüssen der ersten Stromversorgung (200a) geschaltet ist, eine erste Spule (L1a) oder eine erste Transformatorwicklung, die eingerichtet ist, eine Spannung von der ersten Stromversorgung (200a) durch Ein- und Ausschalten des ersten Schalters (Tra) zu verstärken, und eine erste Rückflussverhinderungsschaltung (Da), die eingerichtet ist, ein Ausgangssignal von der ersten Spule (L1a) oder der ersten Transformatorwicklung gleichzurichten, umfasst;
einen Wechselrichter (40), der eingerichtet ist, den von der ersten Verstärkerschaltung (20a) ausgegebenen Gleichstrom in den Wechselstrom umzuwandeln und den Wechselstrom auf der Seite der Systemstromversorgung (300) auszugeben;
eine Verbindungseinheit (30), die eingerichtet ist, die Ausgangsseite der ersten Verstärkerschaltung (20a) und die Eingangsseite des Wechselrichters (40) zu verbinden;
eine Potentialsteuerung (102), die eingerichtet ist, eine Leistung von der Systemstromversorgung (300) auf die Seite der Verbindungseinheit (30) auszugeben, um die Spannung an der Verbindungseinheit (30) auf mindestens die Spannung an einer Eingangsseite der ersten Verstärkungsschaltung (20a) einzustellen, indem sie den Wechselrichter (40) während einer Aus-Periode des ersten Schalters (Tra) steuert, so dass die Potentialsteuerung ausgelegt ist, das Steuern derart durchzuführen, dass ein Potential an der ersten Rückflussverhinderungsschaltung (Da) auf der der ersten Energieversorgung (200a) gegenüberliegenden Seite größer oder gleich dem Potential an der ersten Rückflussverhinderungsschaltung (Da) auf der Seite der ersten Energieversorgung (200a) ist;
eine Leerlaufspannungswerterfassungseinheit (104), die eingerichtet ist, einen ersten Leerlaufspannungswert der ersten Stromversorgung (200a) zu erfassen, wenn sich der erste Schalter (Tra) in der Aus-Periode befindet, während die Potenzialsteuerung (102) das Steuern so durchführt, dass die Spannung an der ersten Rückflussverhinderungsschaltung (Da) auf der der ersten Stromversorgung (200a) gegenüberliegenden Seite größer oder gleich der Spannung an der ersten Rückflussverhinderungsschaltung (Da) auf der Seite der ersten Stromversorgung (200a) ist; und
eine Stromversorgungsanomalie-Bestimmungseinheit (106), die eingerichtet ist, zu bestimmen, ob die erste Stromversorgung (200a) eine Anomalie aufweist, basierend auf einem Vergleich zwischen dem ersten Leerlaufspannungswert und einem ersten Referenzspannungswert, der zuvor basierend auf einer Charakteristik der ersten Stromversorgung (200a) festgelegt wird.

6. Photovoltaiksystem aufweisend:
die erste photovoltaische Zelle der ersten Stromversorgung (200a) und
der Leistungsaufbereiter (10) nach einem der Ansprüche 1 bis 5, der eingerichtet ist, den Gleichstrom von der ersten photovoltaischen Zelle in den Wechselstrom umzuwandeln und den Wechselstrom auf der Seite der Systemstromversorgung (300) auszugeben.

7. Photovoltaiksystem aufweisend:
die erste photovoltaische Zelle der ersten Stromversorgung (200a);
die zweite photovoltaische Zelle der zweiten Stromversorgung (200b), die parallel zu der ersten photovoltaischen Zelle geschaltet ist; und
den Leistungsaufbereiter (10) nach einem der Ansprüche 1, 3 und 4, der eingerichtet ist, die Gleichströme von den ersten und zweiten Photovoltaikzellen in die Wechselströme umzuwandeln und die Wechselströme auf der Seite der Systemstromversorgung (300) auszugeben.

8. Verfahren zur Bestimmung von Anomalien, um eine Bestimmung von Anomalien einer ersten Energieversorgung (200a) vorzunehmen, die eine erste photovoltaische Zelle, ein erstes photovoltaisches Modul, in dem erste photovoltaische Zellen in Reihe oder parallel geschaltet sind, oder eine erste Brennstoffzelle ist, die mit einem Leistungsaufbereiter (10) verbunden ist, der eingerichtet ist, einen Gleichstromausgang von der ersten Stromversorgung (200a) zu verstärken, den verstärkten Gleichstrom in einen Wechselstrom umzuwandeln und den Wechselstrom an eine Seite einer Systemstromversorgung (300) auszugeben, wobei der Leistungsaufbereiter (10) eine erste Verstärkungsschaltung (20a) umfasst, die einen ersten Schalter (Tra) umfasst, der zwischen Ausgangsanschlüssen der ersten Stromversorgung (200a) angeschlossen ist, eine erste Spule (L1a) oder eine erste Transformatorwicklung, die eingerichtet ist, eine Spannung von der ersten Stromversorgung (200a) durch Ein- und Ausschalten des ersten Schalters (Tra) zu verstärken, und eine erste Rückflussverhinderungsschaltung (Da), die eingerichtet ist, eine Ausgabe von der ersten Spule (L1a) oder der ersten Transformatorwicklung gleichzurichten, eine zweite Verstärkungsschaltung (20b), die einen zweiten Schalter (Trb) umfasst, der zwischen den Ausgangsanschlüsse einer zweiten Stromversorgung (200b) angeschlossen ist, die eine zweite photovoltaische Zelle, ein zweites photovoltaisches Modul, in dem zweite photovoltaische Zellen in Reihe oder parallel geschaltet sind, oder eine zweite Brennstoffzelle ist, wobei die zweite Verstärkungsschaltung (20b) den Gleichstrom von der zweiten Stromversorgung (200b) durch Ein- und Ausschalten des zweiten Schalters (Trb) verstärkt; und eine Verbindungseinheit (30), die eingerichtet ist, eine Ausgangsseite der ersten Verstärkungsschaltung (20a) und eine Ausgangsseite der zweiten Verstärkungsschaltung (20b) parallel zueinander zu verbinden,
wobei das Verfahren zur Bestimmung von Anomalien die folgenden Schritte aufweist:
Durchführen einer Steueroperation, so dass ein Potential an der ersten Rückflussverhinderungsschaltung (Da) auf der der ersten Stromversorgung (200a) gegenüberliegenden Seite größer oder gleich einem Potential an der ersten Rückflussverhinderungsschaltung (Da) auf der Seite der ersten Stromversorgung (200a) während einer Aus-Periode des ersten Schalters (Tra) ist;
Erfassen eines ersten Leerlaufspannungswertes der ersten Stromversorgung (200a), wenn sich der erste Schalter (Tra) im Aus-Zustand befindet, während das Steuern so durchgeführt wird, dass die Spannung an der ersten Rückflussverhinderungsschaltung (Da) auf der der ersten Stromversorgung (200a) gegenüberliegenden Seite größer oder gleich der Spannung an der ersten Rückflussverhinderungsschaltung (Da) auf der Seite der ersten Stromversorgung (200a) ist; und
Bestimmen, ob die erste Stromversorgung (200a) eine Anomalie aufweist, basierend auf einem Vergleich zwischen dem ersten Leerlaufspannungswert und einem ersten Referenzspannungswert, der zuvor basierend auf einer Charakteristik der ersten Stromversorgung (200a) festgelegt wird, wobei
in dem Steuerschritt die Steueroperation so durchgeführt wird, dass die Spannung an der Verbindungseinheit (30) größer oder gleich der Spannung an einer Eingangsseite der ersten Verstärkungsschaltung (20a) ist, indem der zweite Schalter (Trb) ein- und ausgeschaltet wird, wenn der erste Leerlaufspannungswert erfasst wird, so dass das Steuern so durchgeführt wird, dass das Potential an der ersten Rückflussverhinderungsschaltung (Da) auf der der ersten Stromversorgung (200a) gegenüberliegenden Seite größer oder gleich dem Potential an der ersten Rückflussverhinderungsschaltung (Da) auf der Seite der ersten Stromversorgung (200a) ist.

9. Verfahren zur Bestimmung von Anomalien nach Anspruch 8, wobei Der Leistungsaufbereiter (10) aufweist:
einen Wechselrichter (40), der eingerichtet ist, den von der ersten Verstärkerschaltung (20a) ausgegebenen Gleichstrom in den Wechselstrom umzuwandeln und den Wechselstrom auf der Seite der Systemstromversorgung (300) auszugeben; und
eine Verbindungseinheit (30), die eingerichtet ist, eine Ausgangsseite der ersten Verstärkerschaltung (20a) und eine Eingangsseite des Wechselrichters (40) zu verbinden, wobei
in dem Steuerschritt eine Leistung von der Systemstromversorgung (300) auf die Seite der Verbindungseinheit (30) ausgegeben wird, um die Spannung an der Verbindungseinheit (30) auf mindestens die Spannung an der Eingangsseite der ersten Verstärkungsschaltung (20a) einzustellen, indem der Wechselrichter (40) gesteuert wird, wenn der erste Leerlaufspannungswert erfasst wird, so dass das Steuern so durchgeführt wird, dass das Potential an der ersten Rückflussverhinderungsschaltung (Da) auf der der ersten Stromversorgung (200a) gegenüberliegenden Seite größer oder gleich dem Potential an der ersten Rückflussverhinderungsschaltung (Da) auf der Seite der ersten Stromversorgung (20b) ist.

10. Verfahren zur Bestimmung von Anomalien nach Anspruch 8, wobei
der Leistungsaufbereiter (10) einen Wechselrichter (40) umfasst, der mit der Ausgangsseite der ersten Verstärkerschaltung (20a) verbunden ist, wobei die Verbindungseinheit (30) dazwischen angeordnet ist, wobei der Wechselrichter (40) den Gleichstromausgang von der ersten Verstärkerschaltung (20a) in den Wechselstrom umwandelt und den Wechselstrom auf der Seite der Systemstromversorgung (300) ausgibt, wobei
in dem Steuerschritt eine Leistung von der Systemstromversorgung (300) auf die Seite der Verbindungseinheit (30) ausgegeben wird, um die Spannung an der Verbindungseinheit (30) durch Steuern des Wechselrichters (40) auf mindestens die Spannung an der Eingangsseite der ersten Verstärkungsschaltung (20a) einzustellen, wenn das Steuern nicht so durchgeführt werden kann, dass die Spannung an der Anschlusseinheit (30) größer oder gleich der Spannung an der Eingangsseite der ersten Verstärkungsschaltung (20a) ist, indem der zweite Schalter (Trb) ein- und ausgeschaltet wird, so dass das Steuern so durchgeführt wird, dass das Potential an der ersten Rückflussverhinderungsschaltung (Da) auf der der ersten Stromversorgung (200a) gegenüberliegenden Seite größer oder gleich dem Potential an der ersten Rückflussverhinderungsschaltung (Da) auf der Seite der ersten Stromversorgung (200a) ist.

11. Verfahren zur Bestimmung von Anomalien, um eine Bestimmung von Anomalien einer ersten Energieversorgung (200a) vorzunehmen, die eine erste photovoltaische Zelle, ein erstes photovoltaisches Modul, in dem erste photovoltaische Zellen in Reihe oder parallel geschaltet sind, oder eine erste Brennstoffzelle ist, die mit einem Leistungsaufbereiter (10) verbunden ist, der eingerichtet ist, einen Gleichstromausgang von der ersten Stromversorgung (200a) zu verstärken, den verstärkten Gleichstrom in einen Wechselstrom umzuwandeln und den Wechselstrom an eine Seite einer Systemstromversorgung (300) auszugeben, wobei der Leistungsaufbereiter (10) eine erste Verstärkungsschaltung (20a) umfasst, die einen ersten Schalter (Tra) umfasst, der zwischen Ausgangsanschlüssen der ersten Stromversorgung (200a) angeschlossen ist, eine erste Spule (L1a) oder eine erste Transformatorwicklung, die eingerichtet ist, eine Spannung von der ersten Stromversorgung (200a) durch Ein- und Ausschalten des ersten Schalters (Tra) zu erhöhen, und eine erste Rückflussverhinderungsschaltung (Da), die eingerichtet ist, einen Ausgang von der ersten Spule (L1a) oder der ersten Transformatorwicklung gleichzurichten; einen Wechselrichter (40), der eingerichtet ist, den von der ersten Verstärkerschaltung (20a) ausgegebenen Gleichstrom in den Wechselstrom umzuwandeln und den Wechselstrom auf der Seite der Systemstromversorgung (300) auszugeben; und eine Verbindungseinheit (30), die eingerichtet ist, die Ausgangsseite der ersten Verstärkerschaltung (20a) und die Eingangsseite des Wechselrichters (40) zu verbinden;
wobei das Verfahren zur Bestimmung von Anomalien die folgenden Schritte aufweist:
Ausgeben einer Leistung von der Systemstromversorgung (300) auf die Seite der Verbindungseinheit (30), um die Spannung an der Anschlusseinheit (30) auf mindestens die Spannung an einer Eingangsseite der ersten Verstärkungsschaltung (20a) einzustellen, indem der Wechselrichter (40) während einer Aus-Periode des ersten Schalters (Tra) gesteuert wird, so dass das Steuern so durchgeführt wird, dass ein Potential an der ersten Rückflussverhinderungsschaltung (Da) auf der der ersten Energieversorgung (200a) gegenüberliegenden Seite größer oder gleich dem Potential an der ersten Rückflussverhinderungsschaltung (Da) auf der Seite der ersten Energieversorgung (200a) ist;
Erfassen eines ersten Leerlaufspannungswertes der ersten Stromversorgung (200a), wenn sich der erste Schalter (Tra) im Aus-Zustand befindet, während das Steuern so durchgeführt wird, dass die Spannung an der ersten Rückflussverhinderungsschaltung (Da) auf der der ersten Stromversorgung (200a) gegenüberliegenden Seite größer oder gleich der Spannung an der ersten Rückflussverhinderungsschaltung (Da) auf der Seite der ersten Stromversorgung (200a) ist; und
Bestimmen, ob die erste Stromversorgung (200a) eine Anomalie aufweist, basierend auf einem Vergleich zwischen dem ersten Leerlaufspannungswert und einem ersten Referenzspannungswert, der zuvor basierend auf einer Charakteristik der ersten Stromversorgung (200a) festgelegt wird.

## Revendications

1. Conditionneur d'énergie (10) qui est configuré pour amplifier une sortie en courant continu d'une première alimentation en énergie (200a) qui est une première cellule photovoltaïque, un premier module photovoltaïque dans lequel des premières cellules photovoltaïques sont connectées en série ou en parallèle, ou une première pile à combustible, pour convertir le courant continu amplifié en un courant alternatif, et pour délivrer en sortie le courant alternatif sur un côté d'une alimentation en énergie système (300), le conditionneur d'énergie (10) comprenant :
un premier circuit d'amplification (20a) qui comprend un premier commutateur (Tra) connecté entre des bornes de sortie de la première alimentation en énergie (200a), une première bobine (L1a) ou un premier enroulement de transformateur configuré pour amplifier une tension provenant de la première alimentation en énergie (200a) en activant et désactivant le premier commutateur (Tra), et un premier circuit anti-reflux (Da) configuré pour redresser une sortie de la première bobine (L1a) ou du premier enroulement de transformateur ;
un second circuit d'amplification (20b) configuré pour amplifier une tension au niveau d'une seconde alimentation en énergie (200b) qui est une seconde cellule photovoltaïque, un second module photovoltaïque dans lequel des secondes cellules photovoltaïques sont connectées en série ou en parallèle, ou une seconde pile à combustible ;
une unité de connexion (30) configurée pour connecter un côté de sortie du premier circuit d'amplification (20a) et un côté de sortie du second circuit d'amplification (20b) en parallèle l'un à l'autre,
un dispositif de commande de potentiel (102) configuré pour effectuer une commande de telle sorte qu'un potentiel au niveau du premier circuit anti-reflux (Da) sur le côté opposé à la première alimentation en énergie (200a) est supérieur ou égal à un potentiel au niveau du premier circuit anti-reflux (Da) sur le côté de la première alimentation en énergie (200a) pendant une période de désactivation du premier commutateur (Tra) ;
une unité d'acquisition de valeur de tension en circuit ouvert (104) configurée pour acquérir une première valeur de tension en circuit ouvert de la première alimentation en énergie (200a), lorsque le premier commutateur (Tra) est dans la période de désactivation alors que le dispositif de commande de potentiel (102) effectue la commande de sorte que la tension au niveau du premier circuit anti-reflux (Da) sur le côté opposé à la première alimentation en énergie (200a) est supérieure ou égale à la tension au niveau du premier circuit anti-reflux (Da) sur le côté de la première alimentation en énergie (200a) ; et
une unité de détermination d'anomalie d'alimentation en énergie (106) configurée pour déterminer si la première alimentation en énergie (200a) présente une anomalie sur la base d'une comparaison entre la première valeur de tension en circuit ouvert et une première valeur de tension de référence qui est préalablement fixée sur la base d'une caractéristique de la première alimentation en énergie (200a),
dans lequel le dispositif de commande de potentiel (102) est adapté pour effectuer la commande de sorte que la tension au niveau de l'unité de connexion (30) est supérieure ou égale à la tension sur un côté d'entrée du premier circuit d'amplification (20a) en activant et désactivant un second commutateur (Trb) inclus dans le second circuit d'amplification (20b) lorsque l'unité d'acquisition de valeur de tension en circuit ouvert (104) acquiert la première valeur de tension en circuit ouvert, de sorte que le dispositif de commande de potentiel (102) est adapté pour effectuer la commande de sorte que le potentiel au niveau du premier circuit anti-reflux (Da) sur le côté opposé à la première alimentation en énergie (200a) est supérieur ou égal au potentiel au niveau du premier circuit anti-reflux (Da) sur le côté de la première alimentation en énergie (20a).

2. Conditionneur d'énergie (10) selon la revendication 1, comprenant en outre :
un onduleur (40) configuré pour convertir la sortie en courant continu provenant du premier circuit d'amplification (20a) en courant alternatif, et pour délivrer en sortie le courant alternatif sur le côté de l'alimentation en énergie système (300) ;
ladite unité de connexion (30) étant configurée pour connecter ledit côté de sortie du premier circuit d'amplification (20a) et un côté d'entrée de l'onduleur (40),
dans lequel le dispositif de commande de potentiel (102) est adapté pour délivrer en sortie une énergie depuis l'alimentation en énergie système (300) sur le côté de l'unité de connexion (30) pour établir la tension au niveau de l'unité de connexion (30) au moins à la tension sur un côté d'entrée du premier circuit d'amplification (20a) en commandant l'onduleur (40) lorsque l'unité d'acquisition de valeur de tension en circuit ouvert (104) acquiert la première valeur de tension en circuit ouvert, de sorte que le dispositif de commande de potentiel (102) est adapté pour effectuer la commande de sorte que le potentiel au niveau du premier circuit anti-reflux (Da) sur le côté opposé à la première alimentation en énergie (200a) est supérieur ou égal au potentiel au niveau du premier circuit anti-reflux (Da) sur le côté de la première alimentation en énergie (200a) .

3. Conditionneur d'énergie (10) selon la revendication 1, comprenant en outre :
un onduleur (40) configuré pour convertir la sortie en courant continu provenant de l'unité de connexion (30) en courant alternatif, et pour délivrer en sortie le courant alternatif sur le côté d'une alimentation en énergie système (300),
dans lequel le dispositif de commande de potentiel (102) est adapté pour délivrer en sortie une énergie provenant de l'alimentation en énergie système (300) sur le côté de l'unité de connexion (30) pour établir la tension au niveau de l'unité de connexion (30) au moins à la tension sur le côté d'entrée du premier circuit d'amplification (20a) en commandant l'onduleur (40) lorsque le dispositif de commande de potentiel (102) ne peut pas effectuer la commande de sorte que la tension au niveau de l'unité de connexion (30) est supérieure ou égale à la tension sur le côté d'entrée du premier circuit d'amplification (20a) en activant et en désactivant le second commutateur (Trb) inclus dans le second circuit d'amplification (20b), de sorte que le dispositif de commande de potentiel (102) est adapté pour effectuer la commande de telle sorte que le potentiel au niveau du premier circuit anti-reflux (Da) sur le côté opposé à la première alimentation en énergie (200a) est supérieur ou égal au potentiel au niveau du premier circuit anti-reflux (Da) sur le côté de la première alimentation en énergie (200a).

4. Conditionneur d'énergie (10) selon l'une quelconque des revendications 1 et 3, dans lequel le second circuit d'amplification (20b) comprend : une seconde bobine (L1b) ou un second enroulement de transformateur configuré pour amplifier la tension provenant de la seconde alimentation en énergie (200b) en activant et désactivant le second commutateur (Trb) ; et un second circuit anti-reflux (Db) configuré pour redresser la sortie provenant de la seconde bobine (L1b) ou du second enroulement de transformateur,
dans lequel le dispositif de commande de potentiel (102) est adapté pour effectuer la commande de telle sorte que le potentiel au niveau du second circuit anti-reflux (Db) sur le côté opposé à la seconde alimentation en énergie (200b) est supérieur ou égal au potentiel au niveau du second circuit anti-reflux (Db) sur le côté de la seconde alimentation en énergie (200b) pendant la période de désactivation du second commutateur (Trb),
dans lequel l'unité d'acquisition de valeur de tension en circuit ouvert (104) est adaptée pour acquérir une seconde valeur de tension en circuit ouvert de la seconde alimentation en énergie (200b), lorsque le second commutateur (Trb) est dans la période de désactivation alors que le dispositif de commande de potentiel (102) effectue la commande de sorte que la tension au niveau du second circuit anti-reflux (Db) sur le côté opposé à la seconde alimentation en énergie (200b) est supérieure ou égale à la tension au niveau du second circuit anti-reflux (Db) sur le côté de la seconde alimentation en énergie (200b), et
dans lequel l'unité de détermination d'anomalie d'alimentation en énergie (106) est adaptée pour déterminer si la seconde alimentation en énergie (200b) présente l'anomalie sur la base de la comparaison entre la seconde valeur de tension en circuit ouvert et une seconde valeur de tension de référence qui est préalablement fixée sur la base de la caractéristique de la seconde alimentation en énergie (200b).

5. Conditionneur d'énergie (10) qui est configuré pour amplifier une sortie en courant continu provenant d'une première alimentation en énergie (200a) qui est une première cellule photovoltaïque, un premier module photovoltaïque dans lequel des premières cellules photovoltaïques sont connectées en série ou en parallèle, ou une première pile à combustible, pour convertir le courant continu amplifié en un courant alternatif, et pour délivrer en sortie le courant alternatif sur un côté d'une alimentation en énergie système (300), le conditionneur d'énergie (10) comprenant :
un premier circuit d'amplification (20a) qui comprend un premier commutateur (Tra) connecté entre des bornes de sortie de la première alimentation en énergie (200a), une première bobine (L1a) ou un premier enroulement de transformateur configuré pour amplifier une tension provenant de la première alimentation en énergie (200a) en activant et désactivant le premier commutateur (Tra), et un premier circuit anti-reflux (Da) configuré pour redresser une sortie de la première bobine (L1a) ou du premier enroulement de transformateur ;
un onduleur (40) configuré pour convertir la sortie en courant continu provenant du premier circuit d'amplification (20a) en courant alternatif, et pour délivrer en sortie le courant alternatif sur le côté de l'alimentation en énergie système (300) ;
une unité de connexion (30) configurée pour connecter le côté de sortie du premier circuit d'amplification (20a) et le côté d'entrée de l'onduleur (40) ;
un dispositif de commande de potentiel (102) configuré pour délivrer en sortie une énergie depuis l'alimentation en énergie système (300) sur le côté de l'unité de connexion (30) pour établir la tension au niveau de l'unité de connexion (30) au moins à la tension sur un côté d'entrée du premier circuit d'amplification (20a) en commandant l'onduleur (40) pendant une période de désactivation du premier commutateur (Tra), de sorte que le dispositif de commande de potentiel est adapté pour effectuer une commande de sorte qu'un potentiel au niveau du premier circuit anti-reflux (Da) sur le côté opposé à la première alimentation en énergie (200a) est supérieur ou égal au potentiel au niveau du premier circuit anti-reflux (Da) sur le côté de la première alimentation en énergie (200a) ;
une unité d'acquisition de valeur de tension en circuit ouvert (104) configurée pour acquérir une première valeur de tension en circuit ouvert de la première alimentation en énergie (200a), lorsque le premier commutateur (Tra) est dans la période de désactivation alors que le dispositif de commande de potentiel (102) effectue la commande de sorte que la tension au niveau du premier circuit anti-reflux (Da) sur le côté opposé à la première alimentation en énergie (200a) est supérieure ou égale à la tension au niveau du premier circuit anti-reflux (Da) sur le côté de la première alimentation en énergie (200a) ; et
une unité de détermination d'anomalie d'alimentation en énergie (106) configurée pour déterminer si la première alimentation en énergie (200a) présente une anomalie sur la base d'une comparaison entre la première valeur de tension en circuit ouvert et une première valeur de tension de référence qui est préalablement fixée sur la base d'une caractéristique de la première alimentation en énergie (200a).

6. Système photovoltaïque comprenant :
ladite première cellule photovoltaïque qui est constituée de la première alimentation en énergie (200a) ; et
le conditionneur d'énergie (10) selon l'une quelconque des revendications 1 à 5 configuré pour convertir le courant continu provenant de la première cellule photovoltaïque en courant alternatif et pour délivrer en sortie le courant alternatif sur le côté de l'alimentation en énergie système (300).

7. Système photovoltaïque comprenant :
ladite première cellule photovoltaïque qui est constituée de la première alimentation en énergie (200a) ;
ladite seconde cellule photovoltaïque qui est constituée de la seconde alimentation en énergie (200b) connectée en parallèle à la première cellule photovoltaïque ; et
le conditionneur d'énergie (10) selon l'une quelconque des revendications 1, 3, et 4 configuré pour convertir les courants continus provenant des première et seconde cellules photovoltaïques en courants alternatifs et pour délivrer en sortie les courants alternatifs sur le côté de l'alimentation en énergie système (300).

8. Méthode de détermination d'anomalie pour réaliser une détermination d'anomalie d'une première alimentation en énergie (200a) qui est une première cellule photovoltaïque, un premier module photovoltaïque dans lequel des premières cellules photovoltaïques sont connectées en série ou en parallèle, ou une première pile à combustible, connecté à un conditionneur d'énergie (10) configuré pour amplifier une sortie en courant continu provenant la première alimentation en énergie (200a), pour convertir le courant continu amplifié en un courant alternatif, et pour délivrer en sortie le courant alternatif sur un côté d'une alimentation en énergie système (300), le conditionneur d'énergie (10) comprenant un premier circuit d'amplification (20a) qui comprend un premier commutateur (Tra) connecté entre des bornes de sortie de la première alimentation en énergie (200a), une première bobine (L1a) ou un premier enroulement de transformateur configuré pour amplifier une tension provenant de la première alimentation en énergie (200a) en activant et désactivant le premier commutateur (Tra), et un premier circuit anti-reflux (Da) configuré pour redresser une sortie de la première bobine (L1a) ou du premier enroulement de transformateur, un second circuit d'amplification (20b) qui comprend un second commutateur (Trb) connecté entre des bornes de sortie d'une seconde alimentation en énergie (200b) qui est une seconde cellule photovoltaïque, un second module photovoltaïque dans lequel des secondes cellules photovoltaïques sont connectées en série ou en parallèle, ou une seconde pile à combustible, le second circuit d'amplification (20b) amplifiant le courant continu provenant de la seconde alimentation en énergie (200b) en activant et désactivant le second commutateur (Trb) ; et une unité de connexion (30) configurée pour connecter un côté de sortie du premier circuit d'amplification (20a) et un côté de sortie du second circuit d'amplification (20b) en parallèle l'un à l'autre,
la méthode de détermination d'anomalie comprenant les étapes suivantes consistant à :
effectuer une commande de telle sorte qu'un potentiel au niveau du premier circuit anti-reflux (Da) sur le côté opposé à la première alimentation en énergie (200a) est supérieur ou égal à un potentiel au niveau du premier circuit anti-reflux (Da) sur le côté de la première alimentation en énergie (200a) pendant une période de désactivation du premier commutateur (Tra) ;
acquérir une première valeur de tension en circuit ouvert de la première alimentation en énergie (200a), lorsque le premier commutateur (Tra) est dans la période de désactivation tout en effectuant la commande de sorte que la tension au niveau du premier circuit anti-reflux (Da) sur le côté opposé à la première alimentation en énergie (200a) est supérieure ou égale à la tension au niveau du premier circuit anti-reflux (Da) sur le côté de la première alimentation en énergie (200a) ; et
déterminer si la première alimentation en énergie (200a) présente une anomalie sur la base d'une comparaison entre la première valeur de tension en circuit ouvert et une première valeur de tension de référence qui est préalablement fixée sur la base d'une caractéristique de la première alimentation en énergie (200a), dans laquelle
lors de l'étape de commande, la commande est effectuée de sorte que la tension au niveau de l'unité de connexion (30) est supérieure ou égale à la tension sur un côté d'entrée du premier circuit d'amplification (20a) en activant et désactivant le second commutateur (Trb) lorsque la première valeur de tension en circuit ouvert est acquise, de sorte que la commande est effectuée de telle sorte que le potentiel au niveau du premier circuit anti-reflux (Da) sur le côté opposé à la première alimentation en énergie (200a) est supérieur ou égal au potentiel au niveau du premier circuit anti-reflux (Da) sur le côté de la première alimentation en énergie (200a).

9. Méthode de détermination d'anomalie selon la revendication 8, dans laquelle
le conditionneur d'énergie (10) comprend :
un onduleur (40) configuré pour convertir la sortie en courant continu provenant du premier circuit d'amplification (20a) en courant alternatif, et pour délivrer en sortie le courant alternatif sur le côté de l'alimentation en énergie système (300) ; et
une unité de connexion (30) configurée pour connecter un côté de sortie du premier circuit d'amplification (20a) et un côté d'entrée de l'onduleur (40), dans laquelle
lors de l'étape de commande, une énergie est délivrée en sortie depuis l'alimentation en énergie système (300) sur le côté de l'unité de connexion (30) pour établir la tension au niveau de l'unité de connexion (30) au moins à la tension sur le côté d'entrée du premier circuit d'amplification (20a) en commandant l'onduleur (40) lorsque la première valeur de tension en circuit ouvert est acquise, de sorte que la commande est effectuée de telle sorte que le potentiel au niveau du premier circuit anti-reflux (Da) sur le côté opposé à la première alimentation en énergie (200a) est supérieur ou égal au potentiel au niveau du premier circuit anti-reflux (Da) sur le côté de la première alimentation en énergie (20b).

10. Méthode de détermination d'anomalie selon la revendication 8, dans laquelle
le conditionneur d'énergie (10) comprend un onduleur (40) qui est connecté au côté de sortie du premier circuit d'amplification (20a) avec l'unité de connexion (30) interposée entre ceux-ci, l'onduleur (40) convertissant la sortie en courant continu du premier circuit d'amplification (20a) en courant alternatif, et délivrant en sortie le courant alternatif sur le côté de l'alimentation en énergie système (300), dans laquelle
lors de l'étape de commande, une énergie est délivrée en sortie par l'alimentation en énergie système (300) sur le côté de l'unité de connexion (30) pour établir la tension au niveau de l'unité de connexion (30) au moins à la tension sur le côté d'entrée du premier circuit d'amplification (20a) en commandant l'onduleur (40) lorsque la commande ne peut pas être effectuée de telle sorte que la tension au niveau de l'unité de connexion (30) est supérieure ou égale à la tension sur le côté d'entrée du premier circuit d'amplification (20a) en activant et désactivant le second commutateur (Trb), de sorte que la commande est effectuée de telle sorte que le potentiel au niveau du premier circuit anti-reflux (Da) sur le côté opposé à la première alimentation en énergie (200a) est -supérieur ou égal au potentiel au niveau du premier circuit anti-reflux (Da) sur le côté de la première alimentation en énergie (200a).

11. Méthode de détermination d'anomalie pour réaliser une détermination d'anomalie d'une première alimentation en énergie (200a) qui est une première cellule photovoltaïque, un premier module photovoltaïque dans lequel des premières cellules photovoltaïques sont connectées en série ou en parallèle, ou une première pile à combustible, connecté à un conditionneur d'énergie (10) configuré pour amplifier une sortie en courant continu provenant la première alimentation en énergie (200a), pour convertir le courant continu amplifié en un courant alternatif, et pour délivrer en sortie le courant alternatif sur un côté d'une alimentation en énergie système (300), le conditionneur d'énergie (10) comprenant un premier circuit d'amplification (20a) qui comprend un premier commutateur (Tra) connecté entre des bornes de sortie de la première alimentation en énergie (200a), une première bobine (L1a) ou un premier enroulement de transformateur configuré pour amplifier une tension provenant de la première alimentation en énergie (200a) en activant et désactivant le premier commutateur (Tra), et un premier circuit anti-reflux (Da) configuré pour redresser une sortie de la première bobine (L1a) ou du premier enroulement de transformateur ; un onduleur (40) configuré pour convertir la sortie en courant continu provenant du premier circuit d'amplification (20a) en courant alternatif, et pour délivrer en sortie le courant alternatif sur le côté de l'alimentation en énergie système (300) ; et une unité de connexion (30) configurée pour connecter le côté de sortie du premier circuit d'amplification (20a) et le côté d'entrée de l'onduleur (40) ;
la méthode de détermination d'anomalie comprenant les étapes suivantes consistant à :
délivrer en sortie une énergie depuis l'alimentation en énergie système (300) sur le côté de l'unité de connexion (30) pour établir la tension au niveau de l'unité de connexion (30) au moins à la tension sur un côté d'entrée du premier circuit d'amplification (20a) en commandant l'onduleur (40) pendant une période de désactivation du premier commutateur (Tra), de sorte qu'une commande est effectuée de telle sorte qu'un potentiel au niveau du premier circuit anti-reflux (Da) sur le côté opposé à la première alimentation en énergie (200a) est supérieur ou égal au potentiel au niveau du premier circuit anti-reflux (Da) sur le côté de la première alimentation en énergie (200a) ;
acquérir une première valeur de tension en circuit ouvert de la première alimentation en énergie (200a), lorsque le premier commutateur (Tra) est dans la période de désactivation tout en effectuant la commande de sorte que la tension au niveau du premier circuit anti-reflux (Da) sur le côté opposé à la première alimentation en énergie (200a) est supérieure ou égale à la tension au niveau du premier circuit anti-reflux (Da) sur le côté de la première alimentation en énergie (200a) ; et
déterminer si la première alimentation en énergie (200a) présente une anomalie sur la base d'une comparaison entre la première valeur de tension en circuit ouvert et une première valeur de tension de référence qui est préalablement fixée sur la base d'une caractéristique de la première alimentation en énergie (200a) .
